# EUROPÄISCHE PATENTSCHRIFT

(11) **EP 2 741 607 B1**
(45) Veröffentlichungstag und Bekanntmachung des Hinweises auf die Patenterteilung: **17.10.2018**
(21) Anmeldenummer: 12744009.7
(22) Anmeldetag: 10.08.2012
(51) Int. Cl.: A01N 43/653, A01N 25/02, A01N 25/04, A01N 25/24, A01P 3/00

(54) **VERWENDUNG UND AGROCHEMISCHE ZUSAMMENSETZUNG VON CARBONSÄURE-DIBUTYLAMIDEN**
USE AND AGROCHEMICAL COMPOSITION OF CARBOXYLIC ACID DIBUTYLAMIDES
UTILISATION DE DIBUTYLAMIDES D'ACIDE CARBOXYLIQUE ET COMPOSITION AGROCHIMIQUE LES CONTENANT

(30) Priorität: 11.08.2011 EP 11177196; 12.08.2011 US 201161522798 P
(43) Veröffentlichungstag der Anmeldung: 18.06.2014
(73) Patentinhaber: Bayer CropScience Aktiengesellschaft, 40789 Monheim (DE)
(72) Erfinder: BAUR, Peter, 86938 Schondorf (DE); STEINBECK, Martin, 50931 Köln (DE); WETCHOLOWSKY, Ingo, 40764 Langenfeld (DE); AULER, Thomas, 51465 Bergisch Gladbach (DE); DANIELS, Alison, Gt. Sampford Essex CB10 2RL (GB); PONTZEN, Rolf, 42799 Leichlingen (DE)
(74) Vertreter: BIP Patents
(86) Internationale Anmeldenummer: PCT/EP2012/065685
(87) Internationale Veröffentlichungsnummer: WO 2013/021045

(56) Entgegenhaltungen:
- WO-A1-88/02216
- WO-A1-2005/104844
- WO-A1-2008/145063
- WO-A1-2010/078852
- WO-A2-2008/101629

## Beschreibung

Die Erfindung betrifft die Verwendung von Carbonsäure-Dibutylamiden in agrochemischen Formulierungen und Pflanzenschutzmitteln, agrochemischen Formulierungen und Pflanzenschutzmittel, die solche Verbindungen enthalten, und die Verwendung als Tankmixzusatzstoff, wobei die Formulierungen und die Planzenschutzmittel Prothioconazol als agrochemischen Wirkstoff enthalten.

Aus der EP-A 0 453 899 ist die Verwendung von C₅-C₁₉-Alkylcarbonsäuredimethylamiden als Kristallisationsinhibitoren für bestimmte zur Kristallisation neigende Azolfungizide, wie Tebuconazol, bekannt. Die Verwendung von Carbonsäure-Dibutylamiden zu diesem Zweck oder zur Verbesserung der Wirkung von Agrochemikalien nach Ausbringung auf die Pflanze wird in diesem Dokument weder offenbart noch nahegelegt.

Aus WO2005/104844 ist bekannt, dass die C₅-C₁₉-Alkylcarbonsäuredimethylamide für bestimmte Wirkstoffe wie zum Beispiel Prothioconazole Penetrationsförderer sind. Die Verwendung von Carbonsäure-Dibutylamiden zu diesem Zweck oder zur Verbesserung der Wirkung von Agrochemikalien nach Ausbringung auf die Pflanze wird in diesem Dokument weder offenbart noch nahegelegt.

In US2011/0124505 werden Zusammensetzungen mit C₅-C₁₉-Alkylcarbonsäuredimethylamiden als Lösungsmittel beansprucht für Biozide und Pestizide und verschiedenen Emulgatoren. Die Verwendung von Carbonsäure-Dibutylamiden zu diesem Zweck oder zur Verbesserung der Wirkung von Agrochemikalien nach Ausbringung auf die Pflanze wird in diesem Dokument weder offenbart noch nahegelegt.

In DE-A-4341986 und WO-A-2008/145063 werden Alkyl- oder Alkenyl-Carbonsäuredialkylamide in agrochemischen Formulierungen zur Verhinderung von Kristallbildung in Spritzbrühen eingesetzt. Die Lehre Alkyl- oder Alkenyl-Carbonsäuredialkylamide als Penetrationsförderer einzusetzen, wird in DE-A-4341986 und WO-A-2008/145063 nicht gegeben.

WO-A-1988/02216 lehrt die Verwendung von Alkyl-Carbonsäuredialkylamiden zur Förderung der Penetration von medizinischen Arzneimitteln durch die menschliche oder tierische Haut sowie Verfahren zur Verwendung von Alkyl-Carbonsäuredialkylamiden in agrochemischen Anwendungen. WO-A-1988/02216 offenbart jedoch nicht speziell den Einsatz der erfindungsgemäß eingesetzten C16-C18-Alkyl/Alkenyl-Carbonsäuredibutylamide.

WO-A-2010/078852 lehrt agrochemische Formulierungen in Form von Suspoemulsionen. WO-A-2010/078852 lehrt jedoch nicht den Einsatz der erfindungsgemäß eingesetzten C16-C18-Alkyl/Alkenyl-Carbonsäuredibutylamide in EC- oder OD-Formulierungen.

In WO-A-2008/101629 werden Biozide Zusammensetzungen beschrieben, die bestimmte Dialkylamide auf Basis von Ölsäure oder Linolsäure enthalten, sowie ihre Verwendung als Lösungsmittel oder Dispergierhilfsmittel für Biozide.

Es wurde nun überraschend gefunden, dass die erfindungsgemäß eingesetzten Carbonsäure-Dibutylamide gegenüber den Alkylcarbonsäuredimethylamiden sehr viel schlechtere Lösungsmittel sind. Trotzdem sind sie ausgezeichnete und sogar bessere Additive zur Förderung der Penetration von Prothioconazol durch die Kutikula der Pflanze als die bekannten Carbonsäuredimethylamide (siehe Beispiele 16 und 17). Damit eignen sie sich zur biologischen Wirkungssteigerung von Prothioconazol. Dabei sind sie um Größenordnungen weniger flüchtig von der Blattoberfläche als die Alkylcarbonsäuredimethylamide. Bei den erfindungsgemäß eingesetzten Carbonsäure-Dibutylamiden waren in Abhängigkeit der enthaltenen Carbonsäuren bzw. Fettsäuren der Kettenlängen C8-10, C12-14 (Kokosfettbasis) und C15-18 (Talgfettbasis) teilweise Unterschiede im Einfluss auf den zeitlichen Verlauf der Wirkstoffpenetration erkennbar. Insbesondere zeigt sich, dass die C16-C18-Alkyl- /Alkenyl-Carbonsäuredibutylamide in EC-Formulierungen zu einer deutlich verbesserten Penetration gegenüber den Carbonsäuredimethylamiden führt (Beispiele 16, 18).

Zusätzlich zeigt sich, dass die C16-C18-Alkyl- /Alkenyl-Carbonsäuredibutylamide gegenüber den C12-C14-Alkyl- /Alkenyl-Carbonsäuredibutylamiden und ganz besonders gegenüber den analogen Carbonsäuredimethylamiden ein deutlich verändertes Penetrationsverhalten aufweisen. Die C16-C18-Alkyl- /Alkenyl-Carbonsäuredibutylamide werden in die Blattkutikula aufgenommen, penetrieren aber nicht weiter ins Blattinnere; dadurch können sie den penetrationsfördernden Effekt über einen langen Zeitraum sicherstellen. Insbesondere die analogen Carbonsäuredimethylamide weisen eine deutlich stärkere Penetration ins Blatt auf, wodurch der penetrationsfördernde Effekt auf die ersten Stunden nach Spritzapplikation beschränkt wird (Beispiel 22).

Ein weiterer Vorteil der C16-C18-Alkyl- /Alkenyl-Carbonsäuredibutylamide gegenüber den C8-C14-Alkyl- /Alkenyl-Carbonsäuredibutylamiden ist ihre weitgehend fehlende Flüchtigkeit.

Gegenstand der Erfindung ist daher die Verwendung von Carbonsäureamiden der Formel (I)

R¹-CO-NR²R³ (I),

worin
- R¹: C₁₆-C₁₈-Alkyl oder C₁₆-C₁₈-Alkenyl bedeutet und
- R²: C₄-Alkyl bedeutet und
- R³: C₄-Alkyl bedeutet
zur Förderung der Penetration von Prothioconazol in Pflanzen.

Dabei bedeuet die Penetration von Prothioconazol in Pflanzen die Penetration von Prothioconazol durch die Blattoberfläche in die Pflanze hinein.

R² und R³ sind vorzugsweise gleich oder verschieden, besonders bevorzugt gleiche Alkylgruppen mit 4 Kohlenstoffatomen, besonders bevorzugt n-butyl, 1-methyl-propyl oder 2-methyl-propyl, ganz besonders bevorzugt n-butyl.

R1 weist 16 - 18 Kohlenstoffatome auf (Tallow - Carbonsäuredibutylamid). Dabei kann C₁₆-C₁₈-Alkyl oder C₁₆-C₁₈-Alkenyl bedeuten.

Die Carbonsäuredibutylamide sind einfach herzustellen. Eine geeignete Herstellvorschrift ist beispielsweise in WO-A-1995/015685 in Beispiel 1 auf Seite 26 für Hexansäure-di-n-propylamid offenbart, die in analoger Weise auch für die Carbonsäuredibutylamide angewendet werden kann (z.B. Beispiel 16 auf Seite 28 der WO-A-1995/015685).

Bevorzugt wird ein Gemisch aus mindestens zwei Carbonsäureamiden der Formel (I) eingesetzt. Bevorzugt findet ein Gemisch auf Basis der Fettsäurezusammensetzung von Talg Verwendung. Eine typische Rohstoffquelle sind Fettsäuren aus Rindertalg.

Besonders bevorzugt weist das erfindungsgemäß eingesetzte Gemisch sowohl mindestens ein Carbonsäureamid der Formel (I) auf, in dem R1 für C₁₆-C₁₈-Alkyl steht, als auch mindestens ein Carbonsäureamid der Formel (I) auf, in dem R1 für C₁₆-C₁₈-Alkenyl steht.

Besonders bevorzugt ist ein Gemisch auf Basis der Fettsäurezusammensetzung in Rindertalg. Darin sind überwiegend gesättigte und ungesättigte Fettsäuren mit einer geraden Zahl von Kohlenstoffatomen enthalten. Fettsäuren mit ungerader Kohlenstoffatomanzahl wie Pentadecansäure (C15) oder Margarinsäure (C17) sind nur in geringen Anteilen enthalten.

Typischerweise enthält Rindertalg mehr als 80 Gew.-%, in der Regel sogar mehr als 90 Gew.-%, bezogen auf die Summe der Gewichte der Fettsäuren, an gesättigten und ungesättigten C16 - C18 - Fettsäuren, insbesondere Palmitinsäure (C16 gesättigt), Palmitoleinsäure (C16 teilweise ungesättigt), Margarinsäure (C17 gesättigt), Stearinsäure (C18 gesättigt) und Ölsäure (C18 teilweise ungesättigt). Dabei sind Margarinsäure und Palmitoleinsäure nur in geringeren Mengen enthalten (von typischerweise weniger als 10 Gew.-% in der Summe).

Die Carbonsäure-Dibutylamide besitzen eine um Größenordungen reduzierte Flüchtigkeit von der Blattoberfläche gegenüber den als Lösunsgmittel verwendeten Carbonsäure-Dimethylamiden. Die Carbonsäure-Dibutylamide mit einer Alkyl-Kettenlänge R1 von C₈ - C₁₀ weisen allerdings ebenfalls noch eine erhebliche praxisrelevante Flüchtigkeit auf. Noch kleinere Kettenlängen sind wegen ihrer Flüchtigkeit im Allgemeinen ungeeignet zum Einsatz als die biologische Wirksamkeit steigerndes Additiv in agrochemischen Formulierungen. Selbst bei den Carbonsäure-Dibutylamide mit einer Alkyl-Kettenlänge R1 von C₁₂ - C₁₄ ist noch ein gewisse Flüchtigkeit vorhanden. Auf der anderen Seite sind die Carbonsäure-Dibutylamide mit einer Alkyl-Kettenlänge R1 von größer C₁₈, d.h. C₂₀, C₂₂, oder größer C₂₂ aufgrund ihrer Molekülgröße nur noch wenig geeignet, signifikant in die Kutikula von Pflanzen einzudringen und scheiden somit als Penetrationsförderer auf Ebene der Pflanze aus. Ideal sind somit die Carbonsäure-Dibutylamide mit einer Alkyl-Kettenlänge R1 von C₁₆ - C₁₈.

Die Carbonsäureamide der Formel (I) werden einzeln oder in Form von Gemischen eingesetzt. Wird in der Beschreibung oder den Ansprüchen von Carbonsäureamiden gesprochen, so sind ausdrücklich einzelne Verbindungen oder Mischungen von mehreren Carbonsäureamiden gemeint.

Die Menge an einer oder mehreren Verbindungen der Formel (I) bei der erfindungsgemäßen Verwendung in Pflanzenschutzmitteln kann nach Wirkstoff und Formulierungstyp in weiten Grenzen variieren. Die Verbindungen der Formel (I) können in allen üblichen agrochemischen Formulierungen eingesetzt werden, bevorzugt in flüssigen. Gegenstand der vorliegenden Erfindung ist auch die Verwendung der Carbonsäureamide der Formel (I) zur Verbesserung der Wirkung auf Ebene der Pflanze als Tank-Mix-Additiv, d. h. dass die Carbonsäureamide erst direkt vor dem Ausbringen einer aus einer konzentrierten Formulierung hergestellten Spritzbrühe zugesetzt werden. Prinzipiell können die Verbindungen aber auch in feste Formulierungen eingebracht werden.

Die erfindungsgemäße Verwendung der Carbonsäureamide der Formel (I) erfolgt beispielsweise in Formulierungen von Prothioconazol und aus daraus durch Verdünnen (bevorzugt mit Wasser) hergestellten anwendungsfertigen Pflanzenschutzmitteln (Spritzbrühen).

Die Erfindung betrifft auch Formulierungen in Form von Emulsionskonzentraten (EC) oder von Dispersionen in Öl (OD) enthaltend
- Prothioconazol sowie
- mindestens ein Carbonsäureamid der Formel (I)

   R¹-CO-NR²R³ (I),

   worin
   - R¹: C₁₆-C₁₈-Alkyl oder C₁₆-C₁₈-Alkenyl bedeutet und
   - R²: C₄-Alkyl bedeutet und
   - R³: C₄-Alkyl bedeutet, sowie
- mindestens ein Lösemittel und / oder Öl.

Bevorzugt beträgt der Gehalt des mindestens einen Carbonsäureamid der Formel (I) in der Formulierung
- 1 bis 50 Gew.-%,
- besonders bevorzugt 2 bis 40 Gew.-%,
- ganz besonders bevorzugt 5 bis 25 Gew.-%.

Aufgrund ihrer physikalischen Eigenschaften wie Aggregatzustand, Viskosität, Festpunkt eignen sich Carbonsäuredibutylamide weniger für die Verwendung in festen Formulierungen wie Granulaten (WG, WP). Geeignete Formuliertypen sind flüssige Formulierungen. Aufgrund der nicht ausgeprägten jedoch vorhandenen Lösekraft der Carbonsäureamide ist eine Verwendung in Suspoemulsionen (SE), welche Wirkstoffe in flüssiger und fester Form enthält, nicht bevorzugt.

Besonders bevorzugt ist die Verwendung in Emulsionskonzentraten (EC), in denen die Carbonsäuredibutylamide gleichmäßig in der homogenen Formulierung verteilt sind und mit innigstem Kontakt zu den gelösten Wirkstoffen mittels der Spritzapplikation auf dem Blatt der Zielkultur aufgebracht wird. Ebenso besonders bevorzugt ist die Verwendung in Dispersionen in Öl (OD), bei der die Carbonsäuredibutylamide in der Ölphase in der Formulierung und nach der Spritzapplikation auf dem Blatt in direktem Kontakt mit dem Wirkstoff stehen.

Die Erfindung betrifft auch anwendungsfertige Pflanzenschutzmittel enthaltend
- Prothioconazol sowie
- mindestens ein Carbonsäureamid der Formel (I)

   R¹-CO-NR²R³ (I),

   worin
   - R¹: C₁₆-C₁₈-Alkyl oder C₁₆-C₁₈-Alkenyl bedeutet und
   - R²: C₄-Alkyl bedeutet und
   - R³: C₄-Alkyl bedeutet, sowie
- mindestens ein Lösemittel und oder Öl sowie
- Wasser.

Bevorzugt beträgt der Gehalt des mindestens einen Carbonsäureamid der Formel (I) in dem Pflanzenschutzmittel
- 0,01 bis 10 Gew.-%,
- besonders bevorzugt 0,02 bis 2 Gew.-%,
- ganz besonders bevorzugt 0,05 bis 0.2 Gew.-%.

Enthält eine Formulierung / ein Pflanzenschutzmittel mehrere Carbonsäureamide der Formel (I), so ist die Mengenangabe als Gesamtgehalt aller Carbonsäureamide der Formel (I) zu verstehen.

Die oben aufgeführten allgemeinen oder in Vorzugsbereichen aufgeführten Restedefinitionen, Wertebereiche bzw. Erläuterungen können auch untereinander, also zwischen den jeweiligen Bereichen und Vorzugsbereichen beliebig kombiniert werden.

Geeignete Öle sind insbesondere Pflanzenöle oder deren Ester oder Mineralöle oder andere organische Lösemittel. Besonders geeignet sind Sonnenblumenöl, Rapsöl oder Rapsölmethylester sowie Paraffinöl oder Weissöl und aromatische Kohlenwasserstoffgemische (bevorzugt Naphalin reduziert), z.B. Solvesso™.

Geeigente Lösungsmittel im Sinne dieser Erfindung sind insbesonder auch organische Lösungsmittel wie N,N-Dimethyldecanamid, N,N-Dimethyloctanamid, N,N-Dimethyldodedecanamid, Gamma-Butyrolacton, Rhodiasolv Polarclean™ (Methyl-5-(dimethylamino)-2-methyl-5-oxopentanoate) N-Methylpyrolidon oder aromatische Kohlenwasserstoffgemische (bevorzugt Naphalin reduziert), z.B. Solvesso™. Weitere geeignete Lösemittel sind beispielsweise aromatische Kohlenwasserstoffe wie z.B. Xylol, Toluol oder Alkylnaphthaline, chlorierte aromatische oder aliphatische Kohlenwasserstoffe wie z.B. Chlorbenzol, Chlorethylen, oder Methylenchlorid, aliphatische Kohlenwasserstoffe wie z.B. Cyclohexan, Alkohole wie z.B. Methanol, Ethanol, iso-Propanol, Butanol oder Glykol sowie deren Ether und Ester (auch Fette und Öle) und (Poly-)Ether, einfache und substituierte Amine, Amide, Lactame (wie N-Alkylpyrrolidone) und Lactone, Ketone wie z.B. Aceton, Methylethylketon, Methylisobutylketon oder Cyclohexanon, stark polare Lösemittel wie Dimethylsulfoxid.

Besonders bevorzugt wird als agrochemischer Wirkstoff Prothioconazole eingesetzt. Besonders geeignet sind Formulierungen enthaltend
- 15 - 35 Gew.-% Prothioconazol und
- 25 - 45 Gew.-% N,N-Dimethyldecanamid und
- 10 - 40 Gew.-% eines oder mehrerer Emulgatoren, bevorzugt Rizinusölpolyglycoletherester oder ein Gemisch aus Ethoxypropoxy-tristyryl-phenol (Blockcopolymer) und Tristyrl-phenol-ethoxylat mit durchschnittlich 16 EO Einheiten oder ein Gemisch aus 2-Ethylhexanolpropylenethylen-glycolether, Ethoxypropoxy-tristyryl-phenol (Blockcopolymer), alkoxyliertes Ethylendiamin mit durchschnittlich 16 EO und 16 PO Einheiten und Tristyrl-phenol-ethoxylat mit durchschnittlich 16 EO Einheiten oder ein Gemisch der genannten Emulgatoren in anderer Kombination und
- 0,01 - 1,0 Gew.-% Entschäumer, bevorzugt Silikon-Antischaum-Emulsion und
- 5 - 30 Gew.-% C16 -C18-Alkyl-Carbonsäuredibutylamid und C16 -C18-Alkenyl-Carbonsäuredibutylamid (in der Summe).

Der Wirkmechanismus der Carbonsäureamide als Penetrationsförderer ist im Wesentlichen unabhängig von der Art des eingesetzten agrochemischen Wirkstoffs. Daher kommt ihre Verwendung in Formulierungen und Pflanzenschutzmitteln enthaltend Prothioconazol, dessen biologische Wirksamkeit durch erhöhtes Eindringen in eine Kultur- oder Schadpflanze erhöht werden kann, in Frage.

Als Beispiele für weitere Fungizide seien genannt:
(1) Inhibitoren der Ergosterol-Biosynthese, wie beispielsweise Aldimorph, Azaconazol, Bitertanol, Bromuconazol, Cyproconazol, Diclobutrazol, Difenoconazol, Diniconazol, Diniconazol-M, Dodemorph, Dodemorph Acetat, Epoxiconazol, Etaconazol, Fenarimol, Fenbuconazol, Fenhexamid, Fenpropidin, Fenpropimorph, Fluquinconazol, Flurprimidol, Flusilazol, Flutriafol, Furconazol, Furconazol-Cis, Hexaconazol, Imazalil, Imazalil Sulfat, Imibenconazol, Ipconazol, Metconazol, Myclobutanil, Naftifin, Nuarimol, Oxpoconazol, Paclobutrazol, Pefurazoat, Penconazol, Piperalin, Prochloraz, Propiconazol, Pyributicarb, Pyrifenox, Quinconazol, Simeconazol, Spiroxamin, Tebuconazol, Terbinafin, Tetraconazol, Triadimefon, Triadimenol, Tridemorph, Triflumizol, Triforin, Triticonazol, Uniconazol, Uniconazol-p, Viniconazol, Voriconazol, 1-(4-Chlorphenyl)-2-(1H-1,2,4-triazol-1-yl)cycloheptanol, Methyl-1-(2,2-dimethyl-2,3-dihydro-1H-inden-1-yl)-1H-imidazol-5-carboxylat, N'-{5-(Difluormethyl)-2-methyl-4-[3-(trimethylsilyl)propoxy]phenyl} -N-ethyl-N-methylimidoformamid, N-Ethyl-N-methyl-N'-{2-methyl-5-(trifluormethyl)-4-[3-(trimethylsilyl)propoxy]phenyl}imidoformamid und O-[1-(4-Methoxyphenoxy)-3,3-dimethylbutan-2-yl] -1H-imidazol-1-carbothioat.
(2) Inhibitoren der Respiration (Atmungsketten-Inhibitoren), wie beispielsweise Bixafen, Boscalid, Carboxin, Diflumetorim, Fenfuram, Fluopyram, Flutolanil, Fluxapyroxad, Furametpyr, Furmecyclox, Isopyrazam Mischung des syn-epimeren Razemates 1RS,4SR,9RS und des anti-empimeren Razemates 1RS,4SR,9SR, Isopyrazam (anti-epimeres Razemat), Isopyrazam (anti-epimeres Enantiomer 1R,4S,9S), Isopyrazam (anti-epimeres Enantiomer 1S,4R,9R), Isopyrazam (syn-epimeres Razemat 1RS,4SR,9RS), Isopyrazam (syn-epimeres Enantiomer 1R,4S,9R), Isopyrazam (syn-epimeres Enantiomer 1S,4R,9S), Mepronil, Oxycarboxin, Penflufen, Penthiopyrad, Sedaxane, Thifluzamid, 1-Methyl-N-[2-(1,1,2,2-tetrafluorethoxy)phenyl]-3-(trifluormethyl)-1H-pyrazol-4-carboxamid, 3-(Difluormethyl)-1-methyl-N-[2-(1,1,2,2-tetrafluorethoxy)phenyl]-1H-pyrazol-4-carboxamid, 3-(Difluormethyl)-N-[4-fluor-2-(1,1,2,3,3,3-hexafluorpropoxy)phenyl]-1-methyl-1H-pyrazol-4-carboxamid, N-[1-(2,4-Dichlorphenyl)-1-methoxypropan-2-yl]-3-(difluormethyl)-1-methyl-1H-pyrazol-4-carboxamid, 5,8-Difluor-N-[2-(2-fluor-4-{[4-(trifluormethyl)pyridin-2-yl]oxy}phenyl)ethyl]quinazolin-4-amin, N-[9-(Dichlormethylen)-1,2,3,4-tetrahydro-1,4-methanonaphthalen-5-yl]-3-(difluormethyl)-1-methyl-1H-pyrazol-4-carboxamid, N-[(1S,4R)-9-(Dichlormethylen)-1,2,3,4-tetrahydro-1,4-methanonaphthalen-5-yl] -3-(difluormethyl)-1-methyl-1H-pyrazol-4-carboxamid und N-[(lR,4S)-9-(Dichlormethylen)-1,2,3,4-tetrahydro-1,4-methanonaphthalen-5-yl]-3-(difluormethyl)-1-methyl-1H-pyrazol-4-carboxamid.
(3) Inhibitoren der Respiration (Atmungsketten-Inhibitoren) am Komplex III der Atmungskette, wie beispielsweise Ametoctradin, Amisulbrom, Azoxystrobin, Cyazofamid, Coumethoxystrobin, Coumoxystrobin, Dimoxystrobin, Enestroburin, Famoxadon, Fenamidon, Fenoxystrobin, Fluoxastrobin, Kresoxim-Methyl, Metominostrobin, Orysastrobin, Picoxystrobin, Pyraclostrobin, Pyrametostrobin, Pyraoxystrobin, Pyribencarb, Triclopyricarb, Trifloxystrobin, (2E)-2-(2-{[6-(3-Chlor-2-methylphenoxy)-5-fluorpyrimidin-4-yl]oxy}phenyl)-2-(methoxyimino)-N-methylethanamid, (2E)-2-(Methoxyimino)-N-methyl-2-(2-{[({(1E)-1-[3-(trifluormethyl)phenyl] ethyliden} amino)oxy] methyl }phenyl)ethanamid, (2E)-2-(Methoxyimino)-N-methyl-2-{2-[(E)-({1-[3-(trifluormethyl)phenyl]ethoxy}imino)methyl]phenyl}ethanamid, (2E)-2-{2-[({[(1E)-1-(3-{[(E)-1-Fluor-2-phenylethenyl]oxy}phenyl)ethyliden]amino}oxy)methyl]phenyl}-2-(methoxyimino)-N-methylethanamid, (2E)-2-{2-[({[(2E,3E)-4-(2,6-Dichlorphenyl)but-3-en-2-yliden]amino}oxy)methyl]phenyl}-2-(methoxyimino)-N-methylethanamid, 2-Chlor-N-(1,1,3-trimethyl-2,3-dihydro-1H-inden-4-yl)pyridin-3-carboxamid, 5-Methoxy-2-methyl-4-(2-{[({(1E)-1-[3-(trifluormethyl)phenyl]ethyliden}amino)oxy]methyl}phenyl)-2,4-dihydro-3H-1,2,4-triazol-3-on, Methyl-(2E)-2-{2-[({cyclopropyl[(4-methoxyphenyl)imino]methyl}sulfanyl)methyl]phenyl}-3-methoxyprop-2-enoat, N-(3-Ethyl-3,5,5-trimethylcyclohexyl)-3-(formylamino)-2-hydroxybenzamid, 2-{2-[(2,5-Dimethylphenoxy)methyl]phenyl}-2-methoxy-N-methylacetamid und (2R)-2-{2-[(2,5-Dimethylphenoxy)methyl]pheny1}-2-methoxy-N-methylacetamid.
(4) Inhibitoren der Mitose und Zellteilung, wie beispielsweise Benomyl, Carbendazim, Chlorfenazol, Diethofencarb, Ethaboxam, Fluopicolid, Fuberidazol, Pencycuron, Thiabendazol, Thiophanat-Methyl, Thiophanat, Zoxamid, 5-Chlor-7-(4-methylpiperidin-1-yl)-6-(2,4,6-trifluorphenyl)[1,2,4]triazolo[1,5-a]pyrimidin und 3-Chlor-5-(6-chlorpyridin-3-yl)-6-methyl-4-(2,4,6-trifluorphenyl)pyridazin.
(5) Verbindungen mit Multisite-Aktivität, wie beispielsweise Bordeauxmischung, Captafol, Captan, Chlorothalonil, Kupferzubereitungen wie Kupferhydroxid, Kupfernaphthenat, Kupferoxid, Kupferoxychlorid, Kupfersulfat, Dichlofluanid, Dithianon, Dodine, Dodine freie Base, Ferbam, Fluorofolpet, Folpet, Guazatin, Guazatinacetat, Iminoctadin, Iminoctadinalbesilat, Iminoctadintriacetat, Mankupfer, Mancozeb, Maneb, Metiram, Zinkmetiram, Kupfer-Oxin, Propamidin, Propineb, Schwefel und Schwefelzubereitungen wie beispielsweise Calciumpolysulfid, Thiram, Tolylfluanid, Zineb und Ziram.
(6) Resistenzinduktoren, wie beispielsweise Acibenzolar-S-Methyl, Isotianil, Probenazol und Tiadinil.
(7) Inhibitoren der Aminosäure- und Protein-Biosynthese, wie beispielsweise Andoprim, Blasticidin-S, Cyprodinil, Kasugamycin, Kasugamycin Hydrochlorid Hydrat, Mepanipyrim, Pyrimethanil und 3-(5-Fluor-3,3,4,4-tetramethyl-3,4-dihydroisoquinolin-1-yl)quinolin.
(8) Inhibitoren der ATP Produktion, wie beispielsweise Fentin Acetat, Fentin Chlorid, Fentin Hydroxid und Silthiofam.
(9) Inhibitoren der Zellwandsynthese, wie beispielsweise Benthiavalicarb, Dimethomorph, Flumorph, Iprovalicarb, Mandipropamid, Polyoxins, Polyoxorim, Validamycin A und Valifenalat.
(10) Inhibitoren der Lipid- und Membran-Synthese, wie beispielsweise Biphenyl, Chloroneb, Dicloran, Edifenphos, Etridiazol, Iodocarb, Iprobenfos, Isoprothiolan, Propamocarb, Propamocarb Hydrochlorid, Prothiocarb, Pyrazophos, Quintozen, Tecnazene und Tolclofos-Methyl.
(11) Inhibitoren der Melanin-Biosynthese, wie beispielsweise Carpropamid, Diclocymet, Fenoxanil, Fthalid, Pyroquilon, Tricyclazol und 2,2,2-Trifluorethyl {3-methyl-1-[(4-methylbenzoyl)amino]butan-2-yl}carbamat.
(12) Inhibitoren der Nukleinsäuresynthese, wie beispielsweise Benalaxyl, Benalaxyl-M (Kiralaxyl), Bupirimat, Clozylacon, Dimethirimol, Ethirimol, Furalaxyl, Hymexazol, Metalaxyl, Metalaxyl-M (Mefenoxam), Ofurace, Oxadixyl und Oxolinsäure.
(13) Inhibitoren der Signaltransduktion, wie beispielsweise Chlozolinat, Fenpiclonil, Fludioxonil, Iprodion, Procymidon, Quinoxyfen und Vinclozolin.
(14) Entkoppler, wie beispielsweise Binapacryl, Dinocap, Ferimzon, Fluazinam und Meptyldinocap.
(15) Weitere Verbindungen, wie beispielsweise Benthiazol, Bethoxazin, Capsimycin, Carvon, Chinomethionat, Pyriofenon (Chlazafenon), Cufraneb, Cyflufenamid, Cymoxanil, Cyprosulfamide, Dazomet, Debacarb, Dichlorophen, Diclomezin, Difenzoquat, Difenzoquat Methylsulphat, Diphenylamin, Ecomat, Fenpyrazamin, Flumetover, Fluoromid, Flusulfamid, Flutianil, Fosetyl-Aluminium, Fosetyl-Calcium, Fosetyl-Natrium, Hexachlorbenzol, Irumamycin, Methasulfocarb, Methylisothiocyanat, Metrafenon, Mildiomycin, Natamycin, Nickel Dimethyldithiocarbamat, Nitrothal-Isopropyl, Octhilinone, Oxamocarb, Oxyfenthiin, Pentachlorphenol und dessen Salze, Phenothrin, Phosphorsäure und deren Salze, Propamocarb-Fosetylat, Propanosin-Natrium, Proquinazid, Pyrimorph, (2E)-3-(4-Tert-butylphenyl)-3-(2-chlorpyridin-4-yl)-1-(morpholin-4-yl)prop-2-en-1-on, (2Z)-3-(4-Tert-butylphenyl)-3-(2-chlorpyridin-4-yl)-1-(morpholin-4-yl)prop-2-en-1-on, Pyrrolnitrin, Tebufloquin, Tecloftalam, Tolnifanid, Triazoxid, Trichlamid, Zarilamid, (3S,6S,7R,8R)-8-Benzyl-3-[({3-[(isobutyryloxy)methoxy]-4-methoxypyridin-2-yl}carbonyl)amino]-6-methyl-4,9-dioxo-1,5-dioxonan-7-yl 2-methylpropanoat, 1-(4-{4-[(5R)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, 1-(4-{4-[(5S)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, 1-(4-{4-[5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, 1-(4-Methoxyphenoxy)-3,3-dimethylbutan-2-yl-1H-imidazol-1-carboxylat, 2,3,5,6-Tetrachlor-4-(methylsulfonyl)pyridin, 2,3-Dibutyl-6-chlorthieno[2,3-d]pyrimidin-4(3H)-on, 2,6-Dimethyl-1H,5H-[1,4]dithiino[2,3-c:5,6-c']dipyrrol-1,3,5,7(2H,6H)-tetron, 2-[5-Methyl-3-(trifluormethyl)-1H-pyrazol-1-yl]-1-(4-{4-[(5R)-5-phenyl-4,5-dihydro-1,2-oxazol-3-yl]-1,3-thiazol-2-yl}piperidin-1-yl)ethanon, 2-[5-Methyl-3-(trifluormethyl)-1H-pyrazol-1-yl]-1-(4-{4-[(5S)-5-phenyl-4,5-dlhydro-1,2-oxazol-3-yl]-1,3-thiazol-2-yl}piperidin-1-yl)ethanon, 2-[5-Methyl-3-(trifluormethyl)-1H-pyrazol-1-yl]-1-{4-[4-(5-phenyl-4,5-dihydro-1,2-oxazol-3-yl)-1,3-thiazol-2-yl]piperidin-1-yl}ethanon, 2-Butoxy-6-iod-3-propyl-4H-chromen-4-on, 2-Chlor-5-[2-chlor-1-(2,6-difluor-4-methoxyphenyl)-4-methyl-1H-imidazol-5-yl]pyridin, 2-Phenylphenol und dessen Salze, 3-(4,4,5-Trifluor-3,3-dimethyl-3,4-dihydroisoquinolin-1-yl)quinolin, 3,4,5-Trichlorpyridin-2,6-dicarbonitril, 3-[5-(4-Chlorphenyl)-2,3-dimethyl-1,2-oxazolidin-3-yl]pyridin, 3-Chlor-5-(4-chlorphenyl)-4-(2,6-difluorphenyl)-6-methylpyridazin, 4-(4-Chlorphenyl)-5-(2,6-difluorphenyl)-3,6-dimethylpyridazin, 5-Amino-1,3,4-thiadiazol-2-thiol, 5-Chlor-N'-phenyl-N'-(prop-2-in-1-yl)thiophen-2-sulfonohydrazid, 5-Fluor-2-[(4-fluorbenzyl)oxy]pyrimidin-4-amin, 5-Fluor-2-[(4-methylbenzyl)oxy]pyrimidin-4-amin, 5-Methyl-6-octyl[1,2,4]triazolo[1,5-a]pyrimidin-7-amin, Ethyl-(2Z)-3-amino-2-cyan-3-phenylprop-2-enoat, N'-(4-{[3-(4-Chlorbenzyl)-1,2,4-thiadiazol-5-yl]oxy}-2,5-dimethylphenyl)-N-ethyl-N-methylimidoformamid, N-(4-Chlorbenzyl)-3-[3-methoxy-4-(prop-2-in-1-yloxy)phenyl]propanamid, N-[(4-Chlorphenyl)(cyan)methyl]-3-[3-methoxy-4-(prop-2-in-1-yloxy)phenyl]propanamid, N-[(5-Brom-3-chlorpyridin-2-yl)methyl]-2,4-dichlorpyridin-3-carboxamid, N-[1-(5-Brom-3-chlorpyridin-2-yl)ethyl]-2,4-dichlorpyridin-3-carboxamid, N-[1-(5-Brom-3-chlorpyridin-2-yl)ethyl]-2-fluor-4-iodpyridin-3-carboxamid, N-{(E)-[(Cyclopropylmethoxy)imino][6-(difluormethoxy)-2,3-difluorphenyl]methyl}-2-phenylacetamid, N-{(Z)-[(Cyclopropylmethoxy)imino][6-(difluormethoxy)-2,3-difluorphenyl]methyl}-2-phenylacetamid, N'-{4-[(3-Tert-butyl-4-cyano-1,2-thiazol-5-yl)oxyl-2-chlor-5-methylphenyl}-N-ethyl-N-methylimidoformamid, N-Methyl-2-(1-{[5-methyl-3-(trifluormethyl)-1H-pyrazol-1-yl]acetyl}piperidin-4-yl)-N-(1,2,3,4-tetrahydronaphthalen-1-yl)-1,3-thiazol-4-carboxamid, N-Methyl-2-(1-{[5-methyl-3-(trifluormethyl)-1H-pyrazol-1-yl]acetyl}piperidin-4-yl)-N-[(1R)-1,2,3,4-tetrahydronaphthalen-1-yl]-1,3-thiazol-4-carboxamid, N-Methyl-2-(1-{[5-methyl-3-(trifluormethyl)-1H-pyrazol-1-yl]acetyl}piperidin-4-yl)-N-[(1S)-1,2,3,4-tetrahydronaphthalen-1-yl]-1,3-thiazol-4-carboxamid, Pentyl-{6-[({[(1-methyl-1H-tetrazol-5-yl)(phenyl)methyliden]amino}oxy)methyl]pyridin-2-yl}carbamat, Phenazin-1-carbonsäure, Chinolin-8-ol, Chinolin-8-olsulfat(2:1) und Tert-butyl {6-[({[(1-methyl-1H-tetrazol-5-yl)(phenyl)methylen]amino}oxy)methyl]pyridin-2-yl}carbamat.
(16) Weitere Verbindungen, wie beispielsweise 1-Methyl-3-(trifluormethyl)-N-[2'-(trifluormethyl)biphenyl-2-yl]-1H-pyrazol-4-carboxamid, N-(4'-Chlorbiphenyl-2-yl)-3-(difluormethyl)-1-methyl-1H-pyrazol-4-carboxamid, N-(2',4'-Dichlorbiphenyl-2-yl)-3-(difluormethyl)-1-methyl-1H-pyrazol-4-carboxamid, 3-(Difluormethyl)-1-methyl-N-[4'-(trifluormethyl)biphenyl-2-yl]-1H-pyrazol-4-carboxamid, N-(2',5'-Difluorbiphenyl-2-yl)-1-methyl-3-(trifluormethyl)-1H-pyrazol-4-carboxamid, 3-(Difluormethyl)-1-methyl-N-[4'-(prop-1-in-1-yl)biphenyl-2-yl]-1H-pyrazol-4-carboxamid, 5-Fluor-1,3-dimethyl-N-[4'-(prop-1-in-1-yl)biphenyl-2-yl]-1H-pyrazol-4-carboxamid, 2-Chlor-N-[4'-(prop-1-in-1-yl)biphenyl-2-yl]pyridin-3-carboxamid, 3-(Difluormethyl)-N-[4'-(3,3-dimethylbut-1-in-1-yl)biphenyl-2-yl]-1-methyl-1H-pyrazol-4-carboxamid, N-[4'-(3,3-Dimethylbut-1-in-1-yl)biphenyl-2-yl]-5-fluor-1,3-dimethyl-1H-pyrazol-4-carboxamid, 3-(Difluormethyl)-N-(4'-ethinylbiphenyl-2-yl)-1-methyl-1H-pyrazol-4-carboxamid, N-(4'-Ethinylbiphenyl-2-yl)-5-fluor-1,3-dimethyl-1H-pyrazol-4-carboxamid, 2-Chlor-N-(4'-ethinylbiphenyl-2-yl)pyridin-3-carboxamid, 2-Chlor-N-[4'-(3,3-dimethylbut-1-in-1-yl)biphenyl-2-yl]pyridin-3-carboxamid, 4-(Difluormethyl)-2-methyl-N-[4'-(trifluormethyl)biphenyl-2-yl]-1,3-thiazol-5-carboxamid, 5-Fluor-N-[4'-(3-hydroxy-3-methylbut-1-in-1-yl)biphenyl-2-yl]-1,3-dimethyl-1H-pyrazol-4-carboxamid, 2-Chlor-N-[4'-(3-hydroxy-3-methylbut-1-in-1-yl)biphenyl-2-yl]pyridin-3-carboxamid, 3-(Difluormethyl)-N-[4'-(3-methoxy-3-methylbut-1-in-1-yl)biphenyl-2-yl]-1-methyl-1H-pyrazol-4-carboxamid, 5-Fluor-N-[4'-(3-methoxy-3-methylbut-1-in-1-yl)biphenyl-2-yl]-1,3-dimethyl-1H-pyrazol-4-carboxamid, 2-Chlor-N-[4'-(3-methoxy-3-methylbut-1-in-1-yl)biphenyl-2-yl]pyridin-3-carboxamid, (5-Brom-2-methoxy-4-methylpyridin-3-yl)(2,3,4-trimethoxy-6-methylphenyl)methanon, N-[2-(4-{[3-(4-Chlorphenyl)prop-2-in-1-yl]oxy}-3-methoxyphenyl)ethyl]-N2-(methylsulfonyl)valinamid, 4-Oxo-4-[(2-phenylethyl)amino]butansäure und But-3-yn-1-yl {6-[({[(Z)-(1-methyl-1H-tetrazol-5-yl)(phenyl)methylen]amino}oxy)methyl]pyridin-2-yl}carbamat.

Alle genannten Mischpartner der Klassen (1) bis (16) können, wenn sie auf Grund ihrer funktionellen Gruppen dazu imstande sind, gegebenenfalls mit geeigneten Basen oder Säuren Salze bilden.

### Als Beispiele für Herbizide seien genannt:

Als Kombinationspartner für die erfindungsgemäßen Verbindungen in Mischungsformulierungen oder im Tank-Mix sind beispielsweise bekannte Wirkstoffe, die auf einer Inhibition von beispielsweise Acetolaktat-Synthase, Acetyl-CoA-Carboxylase, Cellulose-Synthase, Enolpyruvylshikimat-3-phosphat-Synthase, Glutamin-Synthetase, p-Hydroxyphenylpyruvat-Dioxygenase, Phytoendesaturase, Photosystem I, Photosystem II, Protoporphyrinogen-Oxidase beruhen, einsetzbar, wie sie z.B. aus Weed Research 26 (1986) 441-445 oder "The Pesticide Manual", 15th edition, The British Crop Protection Council and the Royal Soc. of Chemistry, 2006 und dort zitierter Literatur beschrieben sind. Als bekannte Herbizide oder Pflanzenwachstumsregulatoren, die mit den erfindungsgemäßen Verbindungen kombiniert werden können, sind z.B. folgende Wirkstoffe zu nennen (die Verbindungen sind entweder mit dem "common name" nach der International Organization for Standardization (ISO) oder mit dem chemischen Namen oder mit der Codenummer bezeichnet) und umfassen stets sämtliche Anwendungsformen wie Säuren, Salze, Ester und Isomere wie Stereoisomere und optische Isomere. Dabei sind beispielhaft eine und zum Teil auch mehrere Anwendungsformen genannt:
Acetochlor, Acibenzolar, Acibenzolar-S-methyl, Acifluorfen, Acifluorfen-sodium, Aclonifen, Alachlor, Allidochlor, Alloxydim, Alloxydim-sodium, Ametryn, Amicarbazone, Amidochlor, Amidosulfuron, Aminocyclopyrachlor, Aminocyclopyrachlor-kalium, Aminocyclopyrachlor-methyl, Aminopyralid, Amitrole, Ammoniumsulfamat, Ancymidol, Anilofos, Asulam, Atrazine, Aviglycin, Azafenidin, Azimsulfuron, Aziprotryn, Beflubutamid, Benazolin, Benazolin-ethyl, Bencarbazone, Benfluralin, Benfuresate, Bensulide, Bensulfuron, Bensulfuron-methyl, Bentazone, Benzfendizone, Benzobicyclon, Benzofenap, Benzofluor, Benzoylprop, Benzyladenin, Bicyclopyrone, Bifenox, Bilanafos, Bilanafosnatrium, Bispyribac, Bispyribac-natrium, Bromacil, Bromobutide, Bromofenoxim, Bromoxynil, Bromuron, Buminafos, Busoxinone, Butachlor, Butafenacil, Butamifos, Butenachlor, Butralin, Butroxydim, Butylate, Cafenstrole, Carbaryl, Carbetamide, Carfentrazone, Carfentrazone-ethyl, Carvone, Chlorcholinchlorid, Chlomethoxyfen, Chloramben, Chlorazifop, Chlorazifop-butyl, Chlorbromuron, Chlorbufam, Chlorfenac, Chlorfenac-natrium, Chlorfenprop, Chlorflurenol, Chlorflurenol-methyl, Chloridazon, Chlorimuron, Chlorimuron-ethyl, Chlormequat-chlorid, Chlornitrofen, 4-Chlorophenoxyacetic acid, Chlorophthalim, Chlorpropham, Chlorthal-dimethyl, Chlorotoluron, Chlorsulfuron, Cinidon, Cinidon-ethyl, Cinmethylin, Cinosulfuron, Clethodim, Clodinafop, Clodinafop-propargyl, Clofencet, Clomazone, Clomeprop, Cloprop, Clopyralid, Cloransulam, Cloransulam-methyl, Cloxyfonac, Cumyluron, Cyanamide, Cyanazine, Cyclanilide, Cycloate, Cyclosulfamuron, Cycloxydim, Cycluron, Cyhalofop, Cyhalofop-butyl, Cyperquat, Cyprazine, Cyprazole, Cytokinine, 2,4-D, 2,4-DB, Daimuron/Dymron, Dalapon, Daminozide, Dazomet, n-Decanol, Desmedipham, Desmetryn, Detosyl-Pyrazolate (DTP), Diallate, Diaminozid, Dicamba, Dichlobenil, Dichlorprop, Dichlorprop-P, Diclofop, Diclofop-methyl, Diclofop-P-methyl, Diclosulam, Diethatyl, Diethatyl-ethyl, Difenoxuron, Difenzoquat, Diflufenican, Diflufenzopyr, Diflufenzopyrnatrium, Dikegulac-sodium, Dimefuron, Dimepiperate, Dimethachlor, Dimethametryn, Dimethenamid, Dimethenamid-P, Dimethipin, Dimetrasulfuron, Dinitramine, Dinoseb, Dinoterb, Diphenamid, Diisopropylnaphthalene, Dipropetryn, Diquat, Diquat-dibromide, Dithiopyr, Diuron, DNOC, Eglinazine-ethyl, Endothal, EPTC, Esprocarb, Ethalfluralin, Ethametsulfuron, Ethametsulfuron-methyl, Ethylnaphthylacetat, Ethephon, Ethidimuron, Ethiozin, Ethofumesate, Ethoxyfen, Ethoxyfen-ethyl, Ethoxysulfuron, Etobenzanid, F-5331, d.h. N-[2-Chlor-4-fluor-5-[4-(3-fluorpropyl)-4,5-dihydro-5-oxo-1H-tetrazol-1-yl]-phenyl]-ethansulfonamid, F-7967, d. h. 3-[7-Chlor-5-fluor-2-(trifluormethyl)-1H-benzimidazol-4-yl]-1-methyl-6-(trifluormethyl) pyrimidin-2,4(1H,3H)-dion, Fenoprop, Fenoxaprop, Fenoxaprop-P, Fenoxaprop-ethyl, Fenoxaprop-P-ethyl, Fenoxasulfone, Fentrazamide, Fenuron, Flamprop, Flamprop-M-isopropyl, Flamprop-M-methyl, Flazasulfuron, Florasulam, Fluazifop, Fluazifop-P, Fluazifop-butyl, Fluazifop-P-butyl, Fluazolate, Flucarbazone, Flucarbazone-sodium, Flucetosulfuron, Fluchloralin, Flufenacet (Thiafluamide), Flufenpyr, Flufenpyr-ethyl, Flumetralin, Flumetsulam, Flumiclorac, Flumiclorac-pentyl, Flumioxazin, Flumipropyn, Fluometuron, Fluorodifen, Fluoroglycofen, Fluoroglycofen-ethyl, Flupoxam, Flupropacil, Flupropanate, Flupyrsulfuron, Flupyrsulfuron-methyl-sodium, Flurenol, Flurenol-butyl, Fluridone, Flurochloridone, Fluroxypyr, Fluroxypyr-meptyl, Flurprimidol, Flurtamone, Fluthiacet, Fluthiacet-methyl, Fluthiamide, Fomesafen, Foramsulfuron, Forchlorfenuron, Fosamine, Furyloxyfen, Gibberellinsäure, Glufosinate, Glufosinateammonium, Glufosinate-P, Glufosinate-P-ammonium, Glufosinate-P-natrium, Glyphosate, Glyphosateisopropylammonium, H-9201, d. h. O-(2,4-Dimethyl-6-nitrophenyl)-O-ethyl-isopropylphosphor amidothioat, Halosafen, Halosulfuron, Halosulfuron-methyl, Haloxyfop, Haloxyfop-P, Haloxyfopethoxyethyl, Haloxyfop-P-ethoxyethyl, Haloxyfop-methyl, Haloxyfop-P-methyl, Hexazinone, HW-02, d. h. 1-(Dimethoxyphosphoryl)-ethyl-(2,4-dichlorphenoxy)acetat, Imazamethabenz, Imazamethabenzmethyl, Imazamox, Imazamox-ammonium, Imazapic, Imazapyr, Imazapyr-isopropylammonium, Imazaquin, Imazaquin-ammonium, Imazethapyr, Imazethapyr-ammonium, Imazosulfuron, Inabenfide, Indanofan, Indaziflam, Indolessigsäure (IAA), 4-Indol-3-ylbuttersäure (IBA), Iodosulfuron, Iodosulfuron-methyl-natrium, Iofensulfuron, Iofensulfuron-natrium, Ioxynil, Ipfencarbazone, Isocarbamid, Isopropalin, Isoproturon, Isouron, Isoxaben, Isoxachlortole, Isoxaflutole, Isoxapyrifop, KUH-043, d. h. 3-({[5-(Difluormethyl)-1-methyl-3-(trifluormethyl)-1H-pyrazol-4-yl]methyl}sulfonyl)-5,5-dimethyl-4,5-dihydro-1,2-oxazol, Karbutilate, Ketospiradox, Lactofen, Lenacil, Linuron, Maleinsäurehydrazid, MCPA, MCPB, MCPB-methyl, -ethyl und -natrium, Mecoprop, Mecopropnatrium, Mecoprop-butotyl, Mecoprop-P-butotyl, Mecoprop-P-dimethylammonium, Mecoprop-P-2-ethylhexyl, Mecoprop-P-kalium, Mefenacet, Mefluidide, Mepiquat-chlorid, Mesosulfuron, Mesosulfuron-methyl, Mesotrione, Methabenzthiazuron, Metam, Metamifop, Metamitron, Metazachlor, Metazasulfuron, Methazole, Methiopyrsulfuron, Methiozolin, Methoxyphenone, Methyldymron, 1-Methylcyclopropen, Methylisothiocyanat, Metobenzuron, Metobromuron, Metolachlor, S-Metolachlor, Metosulam, Metoxuron, Metribuzin, Metsulfuron, Metsulfuron-methyl, Molinate, Monalide, Monocarbamide, Monocarbamide-dihydrogensulfat, Monolinuron, Monosulfuron, Monosulfuron-ester, Monuron, MT-128, d. h. 6-Chlor-N-[(2E)-3-chlorprop-2-en-1-yl]-5-methyl-N-phenylpyridazin-3-amin, MT-5950, d. h. N-[3-Chlor-4-(1-methylethyl)-phenyl]-2-methylpentanamid, NGGC-011, 1-Naphtylacetic Acid (NAA), Naphthylacetamid (NAAm), 2-Naphtoxyacetic Acid, Naproanilide, Napropamide, Naptalam, NC-310, d.h. 4-(2,4-Dichlorobenzoyl)-1-methyl-5-benzyloxypyrazole, Neburon, Nicosulfuron, Nipyraclofen, Nitralin, Nitrofen, Nitroguaiacolate, Nitrophenolat-natrium (Isomerengemisch), Nitrofluorfen, Nonansäure, Norflurazon, Orbencarb, Orthosulfamuron, Oryzalin, Oxadiargyl, Oxadiazon, Oxasulfuron, Oxaziclomefone, Oxyfluorfen, Paclobutrazol, Paraquat, Paraquatdichlorid, Pelargonsäure (Nonansäure), Pendimethalin, Pendralin, Penoxsulam, Pentanochlor, Pentoxazone, Perfluidone, Pethoxamid, Phenisopham, Phenmedipham, Phenmedipham-ethyl, Picloram, Picolinafen, Pinoxaden, Piperophos, Pirifenop, Pirifenop-butyl, Pretilachlor, Primisulfuron, Primisulfuron-methyl, Probenazole, Profluazol, Procyazine, Prodiamine, Prifluraline, Profoxydim, Prohexadione, Prohexadione-calcium, Prohydrojasmone, Prometon, Prometryn, Propachlor, Propanil, Propaquizafop, Propazine, Propham, Propisochlor, Propoxycarbazone, Propoxycarbazone-natrium, Propyrisulfuron, Propyzamide, Prosulfalin, Prosulfocarb, Prosulfuron, Prynachlor, Pyraclonil, Pyraflufen, Pyraflufen-ethyl, Pyrasulfotole, Pyrazolynate (Pyrazolate), Pyrazosulfuron, Pyrazosulfuronethyl, Pyrazoxyfen, Pyribambenz, Pyribambenz-isopropyl, Pyribambenz-propyl, Pyribenzoxim, Pyributicarb, Pyridafol, Pyridate, Pyriftalid, Pyriminobac, Pyriminobac-methyl, Pyrimisulfan, Pyrithiobac, Pyrithiobac-natrium, Pyroxasulfone, Pyroxsulam, Quinclorac, Quinmerac, Quinoclamine, Quizalofop, Quizalofop-ethyl, Quizalofop-P, Quizalofop-P-ethyl, Quizalofop-P-tefuryl, Rimsulfuron, Saflufenacil, Secbumeton, Sethoxydim, Siduron, Simazine, Simetryn, SN-106279, d. h. Methyl-(2R)-2-({7-[2-chlor-4-(trifluormethyl)phenoxy]-2-naphthyl}oxy)propanoat, Sulcotrione, Sulfallate (CDEC), Sulfentrazone, Sulfometuron, Sulfometuron-methyl, Sulfosate (Glyphosate-trimesium), Sulfosulfuron, SW-065, SYN-523, SYP-249, d. h. 1-Ethoxy-3-methyl-1-oxobut-3-en-2-yl-5-[2-chlor-4-(trifluormethyl)phenoxy]-2-nitrobenzoat, SYP-300, d. h. 1-[7-Fluor-3-oxo-4-(prop-2-in-1-yl)-3,4-dihydro-2H-1,4-benzoxazin-6-yl] -3-propyl-2-thioxoimidazolidin-4,5-dion, Tebutam, Tebuthiuron, Tecnazene, Tefuryltrione, Tembotrione, Tepraloxydim, Terbacil, Terbucarb, Terbuchlor, Terbumeton, Terbuthylazine, Terbutryn, Thenylchlor, Thiafluamide, Thiazafluron, Thiazopyr, Thidiazimin, Thidiazuron, Thiencarbazone, Thiencarbazone-methyl, Thifensulfuron, Thifensulfuron-methyl, Thiobencarb, Tiocarbazil, Topramezone, Tralkoxydim, Triafamone, Triallate, Triasulfuron, Triaziflam, Triazofenamide, Tribenuron, Tribenuron-methyl, Tribufos, Trichloressigsäure (TCA), Triclopyr, Tridiphane, Trietazine, Trifloxysulfuron, Trifloxysulfuron-natrium, Trifluralin, Triflusulfuron, Triflusulfuron-methyl, Trimeturon, Trinexapac, Trinexapac-ethyl, Tritosulfuron, Tsitodef, Uniconazole,

Uniconazole-P, Vernolate, ZJ-0862, d. h. 3,4-Dichlor-N-{2-[(4,6-dimethoxypyrimidin-2-yl)oxy]benzyl}anilin, sowie die folgenden Verbindungen:

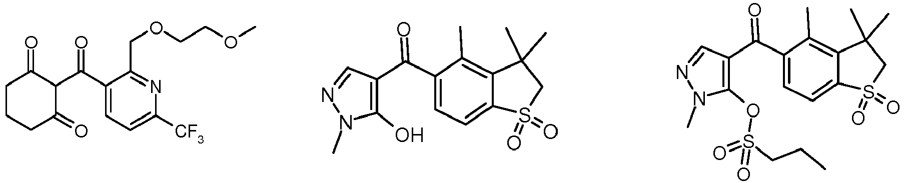

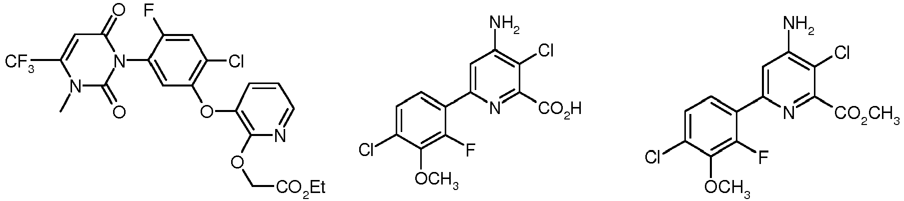

Bevorzugte weitere agrochemische Wirkstoffe sind Triazole und Strobilurine, insbesondere Cyproconazole, Epoxiconazole, Metconazole, Propiconazole, Tebuconazole sowie Azoxystrobin, Fluoxastrobin, Kresoxim-methyl, Metominostrobin, Picoxystrobin, Pyraclostrobin und Trifloxystrobin. Ebenfalls bevorzugt sind Isopyrazam, Indaziflam, Fluopyram, Fluxapyroxad und Bixafen. Ebenfalls bevorzugt sind alle systemischen blattapplizierten bzw. Nachauflauf-Herbizide und Safener, Insbesondere Amidosulfuron, Bromoxynil, Cypsosulfamide, 2,4-D, Glufosinat, Glyphosat, Iodosulfuron-methyl, Isoxadifen-ethyl, Mefenpyr, Mesosulfuron, Mesotrione, Metamitron, Phenmedipham, Sulcotrione, Tembotrione und Thiencarbazone-methyl.

Die vorliegende Erfindung betrifft weiterhin Formulierungen und daraus bereitete Anwendungsformen als Pflanzenschutzmittel und/oder Schädlingsbekämpfungsmittel wie z. B. Drench-, Drip- und Spritzbrühen, umfassend mindestens eines der erfindungsgemäßen Carbonsäure-Dibutylamide . Gegebenenfalls enthalten die Anwendungsformen weitere Pflanzenschutzmittel und/oder Schädlingsbekämpfungsmittel und/oder die Wirkung verbessernde Adjuvantien wie Penetrationsförderer, z. B. vegetative Öle wie beispielsweise Rapsöl, Sonnenblumenöl, Mineralöle wie beispielsweise Paraffinöle, Alkylester vegetativer Fettsäuren wie beispielsweise Rapsöl- oder Sojaölmethylester oder Alkanol-alkoxylate und/oder Spreitmittel wie beispielsweise Alkylsiloxane und/oder Salze z.B. organische oder anorganische Ammonium- oder Phosphoniumsalze wie beispielsweise Ammoniumsulfat oder Diammonium-hydrogenphosphat und/oder die Retention fördernde Mittel wie z. B. Dioctylsulfosuccinat oder Hydroxypropyl-guar Polymere und/oder Humectants wie z.B. Glycerin und/oder Dünger wie beispielsweise Ammonium-, Kalium- oder Phosphor-enthaltende Dünger.

Gegebenenfalls enthalten die Formulierungen neben Prothioconazol weitere agrochemische Wirkstoffe.

Vorzugsweise handelt es sich um Formulierungen oder Anwendungsformen, welche Hilfsstoffe wie beispielsweise Streckmittel, Lösemittel, Spontanitätsförderer, Trägerstoffe, Emulgiermittel, Dispergiermittel, Frostschutzmittel, Biozide, Verdicker und/oder weitere Hilfsstoffe wie beispielsweise Adjuvantien enthalten. Ein Adjuvant in diesem Kontext ist eine Komponente, die die biologische Wirkung der Formulierung verbessert, ohne dass die Komponente selbst eine biologische Wirkung hat. Beispiele für Adjuvantien sind Mittel, die die Retention, das Spreitverhalten, das Anhaften an der Blattoberfläche oder die Penetration fördern.

Diese Formulierungen werden in bekannter Weise hergestellt, z.B. durch Vermischen der Wirkstoffe mit Hilfsstoffen wie beispielsweise Streckmitteln, Lösemitteln und/oder festen Trägerstoffen und/oder weiteren Hilfsstoffen wie beispielsweise oberflächenaktive Stoffe. Die Herstellung der Formulierungen erfolgt entweder in geeigneten Anlagen oder auch vor oder während der Anwendung.

Als Hilfsstoffe können solche Stoffe Verwendung finden, die geeignet sind, der Formulierung des Wirkstoffs oder den aus diesen Formulierungen bereiteten Anwendungsformen (wie z.B. gebrauchsfähigen Pflanzenschutzmitteln wie Spritzbrühen oder Saatgutbeizen) besondere Eigenschaften, wie bestimmte physikalische, technische und/oder biologische Eigenschaften zu verleihen.

Als Streckmittel eignen sich z.B. Wasser, polare und unpolare organische chemische Flüssigkeiten z.B. aus den Klassen der aromatischen und nicht-aromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (Poly-)Ether, der einfachen und substituierten Amine, Amide, Lactame (wie N-Alkylpyrrolidone) und Lactone, der Sulfone und Sulfoxide (wie Dimethylsulfoxid) sowie N,N-Dimethyldecanamid, N,N-Dimethyloctanamid, N,N-Dimethyldodedecanamid, Rhodiasolv Polarclean™ (Methyl-5-(dimethylamino)-2-methyl-5-oxopentanoate).

Im Falle der Benutzung von Wasser als Streckmittel können z.B. auch organische Lösemittel als Hilfslösemittel verwendet werden. Als flüssige Lösemittel kommen im Wesentlichen infrage: Aromaten wie Xylol, Toluol oder Alkylnaphthaline, chlorierte Aromaten oder chlorierte aliphatische Kohlenwasserstoffe wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole wie Butanol oder Glykol sowie deren Ether und Ester, Ketone wie Aceton, Methylethylketon, Methylisobutylketon oder Cyclohexanon, stark polare Lösemittel wie Dimethylformamid und Dimethylsulfoxid sowie Wasser.

Grundsätzlich können alle geeigneten Lösemittel verwendet werden. Geeignete Lösemittel sind beispielsweise aromatische Kohlenwasserstoffe wie z.B. Xylol, Toluol oder Alkylnaphthaline, chlorierte aromatische oder aliphatische Kohlenwasserstoffe wie z.B. Chlorbenzol, Chlorethylen, oder Methylenchlorid, aliphatische Kohlenwasserstoffe wie z.B. Cyclohexan, Paraffine, Erdölfraktionen, mineralische und pflanzliche Öle, Alkohole wie z.B. Methanol, Ethanol, iso-Propanol, Butanol oder Glykol sowie deren Ether und Ester, Ketone wie z.B. Aceton, Methylethylketon, Methylisobutylketon oder Cyclohexanon, stark polare Lösemittel wie Dimethylsulfoxid sowie Wasser.

Grundsätzlich können alle geeigneten Trägerstoffe eingesetzt werden. Als Trägerstoffe kommen insbesondere infrage: z.B. Ammoniumsalze und natürliche Gesteinsmehle wie Kaoline, Tonerden, Talkum, Kreide, Quarz, Attapulgit, Montmorillonit oder Diatomeenerde und synthetische Gesteinsmehl, wie hochdisperse Kieselsäure, Aluminiumoxid und natürliche oder synthetische Silikate, Harze, Wachse und /oder feste Düngemittel. Mischungen solcher Trägerstoffe können ebenfalls verwendet werden. Als Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Papier, Kokosnussschalen, Maiskolben und Tabakstängel.

Auch verflüssigte gasförmige Streckmittel oder Lösemittel können eingesetzt werden. Insbesondere eignen sich solche Streckmittel oder Trägerstoffe, welche bei normaler Temperatur und unter Normaldruck gasförmig sind, z.B. Aerosol-Treibgase wie Halogenkohlenwasserstoffe sowie Butan, Propan, Stickstoff und Kohlendioxid.

Beispiele für Emulgier- und/oder Schaum erzeugende Mittel, Dispergiermittel oder Benetzungsmittel mit ionischen oder nicht-ionischen Eigenschaften oder Mischungen dieser oberflächenaktiven Stoffe sind Salze von Polyacrylsäure, Salze von Lignosulphonsäure, Salze von Phenolsulphonsäure oder Naphthalinsulphonsäure, Polykondensate von Ethylenoxid mit Fettalkoholen oder mit Fettsäuren oder mit Fettaminen, mit substituierten Phenolen (vorzugsweise Alkylphenole oder Arylphenole), Salze von Sulphobernsteinsäureestern, Taurinderivate (vorzugsweise Alkyltaurate), Phosphorsäureester von polyethoxylierten Alkoholen oder Phenole, Fettsäureester von Polyolen und Derivate der Verbindungen enthaltend Sulphate, Sulphonate und Phosphate, z.B. Alkylarylpolyglycolether, Alkylsulfonate, Alkylsulfate, Arylsulfonate, Eiweißhydrolysate, Lignin-Sulfitablaugen und Methylcellulose. Die Anwesenheit einer oberflächenaktiven Substanz ist vorteilhaft, wenn einer der Wirkstoff und/oder einer der inerten Trägerstoffe nicht in Wasser löslich ist und wenn die Anwendung in Wasser erfolgt.

Als weitere Hilfsstoffe können in den Formulierungen und den daraus abgeleiteten Anwendungsformen Farbstoffe wie anorganische Pigmente, z.B. Eisenoxid, Titanoxid, Ferrocyanblau und organische Farbstoffe wie Alizarin-, Azo- und Metallphthalocyaninfarbstoffe und Nähr- und Spurennährstoffe wie Salze von Eisen, Mangan, Bor, Kupfer, Kobalt, Molybdän und Zink vorhanden sein.

Weiterhin enthalten sein können Stabilisatoren wie Kältestabilisatoren, Konservierungsmittel, Oxidationsschutzmittel, Lichtschutzmittel oder andere die chemische und / oder physikalische Stabilität verbessernde Mittel. Weiterhin enthalten sein können schaumerzeugende Mittel oder Entschäumer.

Ferner können die Formulierungen und daraus abgeleiteten Anwendungsformen als zusätzliche Hilfsstoffe auch Haftmittel wie Carboxymethylcellulose, natürliche und synthetische pulverige, körnige oder latexförmige Polymere enthalten wie Gummiarabikum, Polyvinylalkohol, Polyvinylacetat sowie natürliche Phospholipide wie Kephaline und Lecithine und synthetische Phospholipide. Weitere Hilfsstoffe können mineralische und vegetabile Öle sein.

Gegebenenfalls können noch weitere Hilfsstoffe in den Formulierungen und den daraus abgeleiteten Anwendungsformen enthalten sein. Solche Zusatzstoffe sind beispielsweise Duftstoffe, schützende Kolloide, Bindemittel, Klebstoffe, Verdicker, thixotrope Stoffe, Penetrationsförderer, Retentionsförderer, Stabilisatoren, Sequestiermittel, Komplexbildner, Humectans, Spreitmittel. Im Allgemeinen können die Wirkstoffe mit jedem festen oder flüssigen Zusatzstoff, welches für Formulierungszwecke gewöhnlich verwendet wird, kombiniert werden.

Als Retentionsförderer kommen alle diejenigen Substanzen in Betracht, die die dynamische Oberflächenspannung verringern wie beispielsweise Dioctylsulfosuccinat oder die die Visko-Elastizität erhöhen wie beispielsweise Hydroxypropyl-guar Polymere.

Als Penetrationsförderer kommen im vorliegenden Zusammenhang alle diejenigen Substanzen in Betracht, die üblicherweise eingesetzt werden, um das Eindringen agrochemischer Wirkstoffen in Pflanzen zu verbessern. Penetrationsförderer werden in diesem Zusammenhang dadurch definiert, dass sie aus der (in der Regel wässerigen) Applikationsbrühe und/oder aus dem Spritzbelag in die Kutikula der Pflanze eindringen und dadurch die Stoffbeweglichkeit (Mobilität) der Wirkstoffe in der Kutikula erhöhen können. Die in der Literatur (Baur et al., 1997, Pesticide Science 51, 131-152) beschriebene Methode kann zur Bestimmung dieser Eigenschaft eingesetzt werden. Beispielhaft werden genannt Alkoholalkoxylate wie beispielsweise Kokosfettethoxylat (10) oder Isotridecylethoxylat (12), Fettsäureester wie beispielsweise Rapsöl- oder Sojaölmethylester, Fettamine Alkoxylate wie beispielsweise Tallowamine ethoxylat (15) oder Ammonium- und/oder Phosphonium-Salze wie beispielsweise Ammoniumsulfat oder Diammonium-hydrogenphosphat.

Die Formulierungen enthalten bevorzugt zwischen 0,00000001 und 98 Gew.-% Wirkstoff oder, besonders bevorzugt zwischen 0,01 und 95 Gew.-% Wirkstoff, besonders bevorzugt zwischen 0,5 und 90 Gew.-% Wirkstoff, bezogen auf das Gewicht der Formulierung.

Der Wirkstoffgehalt der aus den Formulierungen bereiteten Anwendungsformen (Pflanzenschutzmittel) kann in weiten Bereichen variieren. Die Wirkstoffkonzentration der Anwendungsformen kann üblicherweise zwischen 0,00000001 und 95 Gew.-% Wirkstoff, vorzugsweise zwischen 0,00001 und 1 Gew.-%, bezogen auf das Gewicht der Anwendungsform, liegen. Die Anwendung geschieht in einer den Anwendungsformen angepaßten üblichen Weise.

Der Gehalt an den einzelnen Komponenten kann in den erfindungsgemäßen Formulierungen innerhalb eines größeren Bereichs variiert werden.

Die Herstellung der erfindungsgemäßen Formulierungen erfolgt z.B. in der Weise, dass man die Komponenten in den jeweils gewünschten Verhältnissen miteinander vermischt. Handelt es sich bei dem agrochemischen Wirkstoff um eine Festsubstanz, so setzt man diesen im allgemeinen entweder in fein gemahlener Form oder in Form einer Lösung oder Suspension in einem organischen Solvens oder Wasser ein. Ist der agrochemische Wirkstoff flüssig, so erübrigt sich häufig die Verwendung eines organischen Lösungsmittels. Es ist außerdem möglich, einen festen agrochemischen Wirkstoff in Form einer Schmelze einzusetzen.

Die Temperaturen können bei der Durchführung des Verfahrens in einem bestimmten Bereich variiert werden. Man arbeitet im allgemeinen bei Temperaturen zwischen 0°C und 80°C, vorzugsweise zwischen 10°C und 60°C.

Bei der Durchführung des erfindungsgemäßen Verfahrens geht man im Allgemeinen so vor, dass man die Carbonsäuredibutylamide der Formel (I) mit einem oder mehreren Wirkstoffen sowie gegebenenfalls mit Zusatzstoffen vermischt. Die Reihenfolge, in der die Komponenten miteinander vermischt werden, ist beliebig.

Zur Durchführung des erfindungsgemäßen Verfahrens kommen übliche Geräte in Betracht, die zur Herstellung von agrochemischen Formulierungen eingesetzt werden.

Als Applikationsformen können alle, dem Fachmann als gebräuchlich bekannten Verfahren verwendet werden; beispielsweise genannt seien: Spritzen, Tauchen, Nebeln sowie eine Reihe spezieller Verfahren zur direkten unter- oder oberirdischen Behandlung von gesamten Pflanzen oder Teilen (Saatgut, Wurzel, Stolonen, Stängel, Stamm, Blatt), wie beispielsweise Stamminjektion bei Bäumen oder Stängelbandagen bei perennierenden Pflanzen, und eine Reihe spezieller indirekter Applikationsverfahren.

Der Begriff "Schadorganismen" umfasst alle Formen von Organismen, die im entsprechenden Einsatzgebiet ökonomische und/oder gesundheitliche Schäden verursachen. Bevorzugt sind pflanzliche und tierische Schadorganismen sowie Organismen, die Krankheiten verursachen, besonders bevorzugt sind terrestrische und aquatische Ungräser und Unkräuter, Algen, Moose, Insekten, Milben Nematoden, Nager, Pilze, Bakterien und Viren.

Die jeweilige flächen- und/oder objektbezogene Aufwandmenge der Pflanzenschutzmittel unterschiedlichster Formulierungstypen zur Bekämpfung der genannten Schadorganismen variiert sehr stark. Im Allgemeinen werden hierfür die, dem Fachmann als gebräuchlich für das jeweilige Einsatzgebiet bekannten Applikationsmedien in den gebräuchlichen Mengen eingesetzt; wie beispielsweise von mehreren hundert Liter Wasser pro Hektar bei Standard-Spritzverfahren über wenige Liter Öl pro Hektar bei der 'Ultra Low Volume'-Flugzeugapplikation bis hin zu wenigen Millilitern einer physiologischen Lösungen bei Injektionsverfahren. Die Konzentrationen der erfindungsgemäßen Pflanzenschutzmittel in den entsprechenden Applikationsmedien variieren daher in einem weiten Bereich und sind vom jeweiligen Einsatzgebiet abhängig. Im Allgemeinen werden Konzentrationen verwendet, die dem Fachmann als gebräuchlich für das jeweilige Einsatzgebiet bekannt sind. Bevorzugt sind Konzentrationen von 0,01 Gew.% bis 99 Gew.%, besonders bevorzugt von 0,1 Gew.% bis 90 Gew.%.

Die erfindungsgemäßen Pflanzenschutzmittel können z.B. in den für Flüssigpräparate üblichen Zubereitungsformen entweder als solche oder nach vorherigem Verdünnen mit Wasser ausgebracht werden, also z.B. als Emulsionen, Suspoemulsionen, Suspensionen oder Lösungen. Die Anwendung erfolgt dabei nach üblichen Methoden, also z.B. durch Verspritzen, Gießen oder Injizieren.

Die Aufwandmenge an den erfindungsgemäßen Pflanzenschutzmittel kann innerhalb eines größeren Bereiches variiert werden. Sie richtet sich nach den jeweiligen agrochemischen Wirkstoffen und nach deren Gehalt in den Pflanzenschutzmitteln.

Erfindungsgemäß können alle Pflanzen und Pflanzenteile behandelt werden. Unter Pflanzen werden hierbei alle Pflanzen und Pflanzenpopulationen verstanden wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden wie Kreuzung oder Protoplastenfusion erhaltene Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) und deren Teile behandelt. Der Begriff "Teile" bzw. "Teile von Pflanzen" oder "Pflanzenteile" wurde oben erläutert. Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Rassen, Bio- und Genotypen sein.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Zuckerrüben, Tomaten, Erbsen und andere Gemüsesorten, Baumwolle, Tabak, Raps, sowie Obstpflanzen (mit den Früchten Äpfel, Birnen, Zitrusfrüchten und Weintrauben) erwähnt, wobei Mais, Soja, Kartoffel, Baumwolle, Tabak und Raps besonders hervorgehoben werden. Als Eigenschaften ("Traits") werden besonders hervorgehoben die erhöhte Abwehr der Pflanzen gegen Insekten, Spinnentiere, Nematoden und Schnecken durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid-tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid- resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Bevorzugt sind Pflanzen aus der Gruppe der Nutzpflanzen, Zierpflanzen, Rasenarten, allgemein genutzte Bäume, die in öffentlichen und privaten Bereichen als Zierpflanzen Verwendungen finden, und Forstbestand. Der Forstbestand umfasst Bäume für die Herstellung von Holz, Zellstoff, Papier und Produkten, die aus Teilen der Bäume hergestellt werden.

Der Begriff Nutzpflanzen, wie hier verwendet, bezeichnet Kulturpflanzen, die als Pflanzen für die Gewinnung von Nahrungsmitteln, Futtermitteln, Treibstoffen oder für technische Zwecke eingesetzt werden.

Zu den Nutzpflanzen, die erfindungsgemäß behandelt werden können, zählen z.B. folgende Pflanzenarten: Turf, Reben, Getreide, beispielsweise Weizen, Gerste, Roggen, Hafer, Reis, Mais und Hirse; Rüben, beispielsweise Zuckerrüben und Futterrüben; Früchte, beispielsweise Kernobst, Steinobst und Beerenobst, beispielsweise Äpfel, Birnen, Pflaumen, Pfirsiche, Mandeln, Kirschen und Beeren, z. B. Erdbeeren, Himbeeren, Brombeeren; Hülsenfrüchte, beispielsweise Bohnen, Linsen, Erbsen und Sojabohnen; Ölkulturen, beispielsweise Raps, Senf, Mohn, Oliven, Sonnenblumen, Kokos, Castorölpflanzen, Kakaobohnen und Erdnüsse; Gurkengewächse, beispielsweise Kürbis, Gurken und Melonen; Fasergewächse, beispielsweise Baumwolle, Flachs, Hanf und Jute; Citrusfrüchte, beispielsweise Orangen, Zitronen, Pampelmusen und Mandarinen; Gemüsesorten, beispielsweise Spinat, (Kopf)-Salat, Spargel, Kohlarten, Möhren, Zwiebeln, Tomaten, Kartoffeln und Paprika; Lorbeergewächse, beispielsweise Avocado, Cinnamomum, Kampfer, oder ebenso Pflanzen wie Tabak, Nüsse, Kaffee, Aubergine, Zuckerrohr, Tee, Pfeffer, Weinreben, Hopfen, Bananen, Naturkautschukgewächse sowie Zierpflanzen, beispielsweise Blumen, Sträucher, Laubbäume und Nadelbäume wie Koniferen. Diese Aufzählung stellt keine Limitierung dar.

Als besonders geeignete Zielkulturen für die Anwendung des erfindungsgemäßen Verfahrens sind folgende Pflanzen anzusehen: Bamwolle, Aubergine, Turf, Kernobst, Steinobst, Beerenobst, Mais, Weizen, Gerste, Gurke, Tabak, Reben, Reis, Getreide, Birne, Bohnen, Sojabohnen, Raps, Tomate, Paprika, Melonen, Kohl, Kartoffel und Apfel.

Die erfindungsgemäß behandelten Pflanzen sind, soweit es den Einsatz an Herbiziden betrifft, alle Arten von Unkräutern. Was den Schutz von Kulturpflanzen durch Applikation von beispielsweise Fungiziden und Insektiziden betrifft, ist die Anwendung in wirtschaftlich bedeutenden, beispielsweise auch transgenen Kulturen von Nutz- und Zierpflanzen, z.B. von Getreide, wie Weizen, Gerste, Roggen, Hafer, Hirse, Reis, Maniok und Mais, oder auch Kulturen von Zuckerrübe, Baumwolle, Soja, Raps, Kartoffel, Tomate, Erbse und anderen Gemüsesorten bevorzugt.

Die Erfindung wird durch die Beispiele näher erläutert ohne sie darauf zu beschränken.

### HerstellungsBeispiele

### Penetrationstest

In diesem Test wurde die Penetration von Wirkstoffen durch enzymatisch isolierte Kutikeln von Apfelbaumblättern gemessen. Verwendet wurden Blätter, die in voll entwickeltem Zustand von Apfelbäumen der Sorte Golden Delicious abgeschnitten wurden. Die Isolierung der Kutikeln erfolgte in der Weise, dass zunächst auf der Unterseite mit Farbstoff markierte und ausgestanzte Blattscheiben mittels Vakuuminfiltration mit einer auf einen pH-Wert zwischen 3 und 4 gepufferten Pectinase-Lösung (0,2 bis 2 %ig) gefüllt wurden, dann Natriumazid hinzugefügt wurde und die so behandelten Blattscheiben bis zur Auflösung der ursprünglichen Blattstruktur und zur Ablösung der nicht zellulären Kutikula stehen gelassen wurden.

Danach wurden nur die von Spaltöffnungen und Haaren freien Kutikeln der Blattoberseiten weiter verwendet. Sie wurden mehrfach abwechselnd mit Wasser und einer Pufferlösung vom pH-Wert 7 gewaschen. Die erhaltenen sauberen Kutikel wurden schließlich auf Teflonplättchen aufgezogen und mit einem schwachen Luftstrahl geglättet und getrocknet.

Im nächsten Schritt wurden die so gewonnenen Kutikularmembranen für Membran-Transport-Untersuchungen in Diffusionszellen (= Transportkammern) aus Edelstahl eingelegt. Dazu wurden die Kutikeln mit einer Pinzette mittig auf die mit Silikonfett bestrichenen Ränder der Diffusionszellen plaziert und mit einem ebenfalls gefetteten Ring verschlossen. Die Anordnung war so gewählt worden, dass die morphologische Außenseite der Kutikeln nach außen, also zur Luft, gerichtet war, während die ursprüngliche Innenseite dem Inneren der Diffusionszelle zugewandt war. Die Diffusionszellen waren mit Wasser bzw. mit einem Gemisch aus Wasser und Lösungsmittel gefüllt.

Die Wirkstoffe wurden im Falle von formulierten Proben in Leitungswasser angesetzt und das Testadditiv zugegeben. Bei Verwendung nicht-formulierter Wirkstoffe wurde ein Gemisch von Aceton/Leitungswasser verwendet. Der Acetongehalte variierter dabei zwischen 20% (m/m) und 30% (m/m). Dieses Gemisch wurde dann zu dem vorgelegten Additiv/Emulgatorgemisch gegeben, was eine transparente Lösung oder eine Emulsion ergab. In den Fällen, wo kein Lösungsmittel oder Emulgator verwendet wurde, ist eine applikationsfähige Emulsion durch Ultraschall-Homogenisation hergestellt worden.

Zur Bestimmung der Penetration wurden jeweils 10 µl einer Spritzbrühe der in den Beispielen genannten Zusammensetzung auf die Außenseite einer Kutikula appliziert. Nach dem Auftragen der Spritzbrühen ließ man jeweils das Wasser verdunsten, drehte dann jeweils die Kammern um und stellte sie in thermostatisierte Wannen, wobei auf die Außenseite der Kutikula Luft mit einer definierten Temperatur und Luftfeuchtigkeit geblasen wurde. Die einsetzende Penetration fand daher bei einer relativen Luftfeuchtigkeit von 60 % und einer eingestellten Temperatur von 25°C statt. Die Wirkstoffpenetration wurde mittels HPLC oder radioaktiv markiertem Wirkstoff gemessen.

Wie anhand der in der Tabelle aufgeführten Beispiele zu erkennen ist, führt die Anwesenheit der Carbonsäure-Dibutylamide zu einer deutlichen Steigerung der Penetration aller getesteten Wirkstoffe. Als Kontrolle diente hierbei jeweils die Variante ohne Carbonsäure-Dibutylamide, was entweder der Wirkstoff bzw. die Formulierung allein war oder auch, wenn ein Emulgator in dem Gemisch mit Carbonsäure-Dibutylamid verwendet wurde, der Wirkstoff bzw. die Formulierung mit diesem Emulgator.

Bei den in den Beispielen eingesetzten Dimethyl- und Dibutylcarbonsäureamiden handelt es sich um die jeweiligen Gemische aus den entsprechenden Carbonsäureamiden. So bedeutet beispielsweise C16-18 Dibutylamid ein Gemisch, das im Wesentlichen aus C16- und C18-Dibutylcarbonsäureamiden besteht.

### Tabelle, Beispiel 1 (nicht erfindungsgemäß)

Der Wirkstoff Bromoxynil wurde formuliert als WP 20 in Leitungswasser angesetzt (1 g/l Bromoxynil) und mit Rhizinusethoxylat-Emulgator allein (0.5 g/l) oder unterschiedlichen Spritzbrühenkonzentrationen C12-14-Carbonsäure-Dibutylamid (emulgiert mit einem Rhizinusethoxylat-Emulgator) appliziert und die Penetration von Bromoxynil gemessen. Die Tabelle zeigt die Penetration nach 3 und 24 Stunden bei 20°C und 60% relativer Luftfeuchte.

| | | **Mittlere Penetration von Bromoxynil* in % (n= 4-8)** | |
|---|---|---|---|
| **Bromoxynil WP20 ohne/mit** | Konzentration Zusatz stoff (g/l) | 3h | 24h |
| Bromoxynil WP20 in Wasser ohne Zusatz | - | 1 | 8 |
| Rhizinusethoxylat-Emulgator** | 0.5 | 1 | 12 |
| C12-14 Dibutylamid** | 1 | 5 | 25 |
| C12-14 Dibutylamid** | 3 | 6 | 23 |
| C12-14 Dibutylamid** | 5 | 5 | 26 |

| | | | |
|---|---|---|---|
| * 1.0 g/l Bromoxynil; **Mit 0.5 g/l Rhizinus-ethoxylat als Emulgator | | | |

Der Zusatz von C12-14-Carbonsäure-Dibutylamid hat zu einer deutlichen, oberhalb von 1 g/l wenig konzentrationsabhängigen Steigerung der Penetration von Bromoxynil geführt.

### Tabelle, Beispiel 2 (nicht erfindungsgemäß)

Der Wirkstoff Bromoxynil-Octanoat wurde formuliert als EC225 in Wasser angesetzt (1.5 g/l Bromoxynil-Octanoat) und mit Rhizinusethoxylat-Emulgator allein (0.5 g/l) oder unterschiedlichen Spritzbrühenkonzentrationen C12-14-Carbonsäure-Dibutylamid (emulgiert mit einem Rhizinusethoxylat-Emulgator) appliziert und die Penetration von Bromoxynil-Octanoat gemessen. Die Tabelle zeigt die Penetration nach 3 und 24 Stunden bei 20°C und 60% relativer Luftfeuchte.

| | | **Mittlere Penetration von Bromoxynil-Octanoat* in % (n= 4-8)** | |
|---|---|---|---|
| **Bromoxynil-Octanoat ohne/mit** | Konzentration Zusatzstoff (g/l) | 3h | 24h |
| Bromoxynil-Octanoat EC225 in Wasser ohne Zusatz | - | 5 | 49 |
| Rhizinusethoxylat-Emulgator** | 0.5 | 5 | 51 |
| C12-14 Dibutylamid** | 1 | 12 | 53 |
| C12-14 Dibutylamid** | 3 | 13 | 70 |
| C12-14 Dibutylamid** | 5 | 18 | 68 |

| | | | |
|---|---|---|---|
| * 1.5 g/l Bromoxynil-Octanoat; **Mit 0.5 g/l Rhizinus-ethoxylat als Emulgator | | | |

Der Zusatz von C12-14-Carbonsäure-Dibutylamid hat zu einer deutlichen, konzentrationsabhängigen Steigerung der Penetration von Bromoxynil-octanoat vor allem unmittelbar nach der Applikation geführt.

### Tabelle, Beispiel 3 (nicht erfindungsgemäß)

Der Wirkstoff Bromoxynil wurde in Aceton/Wasser angesetzt (1.5 g/l Bromoxynil) und mit Rhizinusethoxylat-Emulgator allein (0.5 g/l) oder unterschiedlichen Spritzbrühenkonzentrationen C12-14-Carbonsäure-Dibutylamid (emulgiert mit einem Rhizinusethoxylat-Emulgator) appliziert und die Penetration von Bromoxynil gemessen. Die Tabelle zeigt die Penetration nach 3 und 24 Stunden bei 20°C und 60% relativer Luftfeuchte.

| | | **Mittlere Penetration von Bromoxynil* in % (n= 4-8)** | |
|---|---|---|---|
| **Bromoxynil ohne/mit** | Konzentration Zusatzstoff (g/l) | 3h | 24h |
| Rhizinusethoxylat-Emulgator** | 0.5 | 1 | 9 |
| C12-14 Dibutylamid ** | 1 | 29 | 70 |
| C12-14 Dibutylamid ** | 3 | 59 | 85 |
| C12-14 Dibutylamid ** | 5 | 61 | 83 |

| | | | |
|---|---|---|---|
| * 1.5 g/l Bromoxynil; **Mit 0.5 g/l Rhizinus-ethoxylat als Emulgator | | | |

Der Zusatz von C12-14-Carbonsäure-Dibutylamid hat zu einer deutlichen, konzentrationsabhängigen Steigerung der Penetration von Bromoxynil geführt.

### Tabelle, Beispiel 4 (nicht erfindungsgemäß)

Der Wirkstoff Bromoxynil wurde in Aceton/Wasser angesetzt (1.5 g/l Bromoxynil) und mit Rhizinusethoxylat-Emulgator allein (0.5 g/l) oder unterschiedlichen Spritzbrühenkonzentrationen C8-10-Carbonsäure-Dibutylamid (emulgiert mit einem Rhizinusethoxylat-Emulgator) appliziert und die Penetration von Bromoxynil gemessen. Die Tabelle zeigt die Penetration nach 3 und 24 Stunden bei 20°C und 60% relativer Luftfeuchte.

| | | **Mittlere Penetration von Bromoxynil* in % (n= 4-8)** | |
|---|---|---|---|
| **Bromoxynil ohne/mit** | Konzentration Zusatzstoff (g/l) | 3h | 24h |
| Rhizinusethoxylat-Emulgator** | 0.5 | 2 | 10 |
| C8-10 Dibutylamid ** | 1 | 14 | 48 |
| C8-10 Dibutylamid ** | 3 | 27 | 85 |
| C8-10 Dibutylamid** | 5 | 30 | 82 |

| | | | |
|---|---|---|---|
| * 1.5 g/l Bromoxynil; **Mit 0.5 g/l Rhizinus-ethoxylat als Emulgator | | | |

Der Zusatz von C12-14-Carbonsäure-Dibutylamid hat zu einer deutlichen, konzentrationsabhängigen Steigerung der Penetration von Bromoxynil geführt.

### Tabelle, Beispiel 5 (nicht erfindungsgemäß)

Der Wirkstoff Bromoxynil wurde in Aceton/Wasser angesetzt (1.5 g/l Bromoxynil) und mit Rhizinusethoxylat-Emulgator (0.5 g/l) allein oder zusammen C8-10-Carbonsäure-Dibutylamid, C12-14-Carbonsäure-Dibutylamid oder C16-18-Carbonsäure-Dibutylamid (emulgiert mit einem Rhizinusethoxylat-Emulgator) bei einer Spritzbrühenkonzentration von 3 g/l appliziert und die Penetration von Bromoxynil gemessen. Die Tabelle zeigt die Penetration nach 3 und 24 Stunden bei 20°C und 60% relativer Luftfeuchte.

| | | **Mittlere Penetration von Bromoxynil* in % (n= 4-8)** | |
|---|---|---|---|
| **Bromoxynil ohne/mit** | Konzentration Zusatzstoff (g/l) | 3h | 24h |
| Rhizinusethoxylat-Emulgator** | 0.5 | 1 | 6 |
| C8-10 Dibutylamid** | 3 | 16 | 39 |
| C12-14 Dibutylamid** | 3 | 8 | 31 |
| C16-18 Dibutylamid** | 3 | 7 | 32 |

| | | | |
|---|---|---|---|
| * 1.5 g/l Bromoxynil; **Mit 0.5 g/l Rhizinus-ethoxylat als Emulgator | | | |

Der Zusatz der Carbonsäure-Dibutylamide hat zu einer deutlichen Steigerung der Penetration von Bromoxynil geführt.

### Tabelle, Beispiel 6 (nicht erfindungsgemäß)

Der Wirkstoff Bromoxynil wurde in Aceton/Wasser angesetzt (1.5 g/l Bromoxynil) und mit Rhizinusethoxylat-Emulgator (0.5 g/l) allein oder zusammen mit nicht erfindungsgemäßenm C8-10-Carbonsäure-Dimethylamid oder erfindungsgemäßem C8-10-Carbonsäure-Dibutylamid oder C12-14-Carbonsäure-Dibutylamid (emulgiert mit einem Rhizinusethoxylat-Emulgator) bei einer Spritzbrühenkonzentration von 1 bzw. 3 g/l appliziert und die Penetration von Bromoxynil gemessen. Die Tabelle zeigt die Penetration nach 5 und 24 Stunden bei 20°C und 60% relativer Luftfeuchte.

| | | **Mittlere Penetration von Bromoxynil* in % (n= 4-8)** | |
|---|---|---|---|
| **Variante Bromoxynil ohne/mit** | Konzentration (g/l) Carbonsäure-Dialkylamid | 5h | 24h |
| Bromoxynil in Aceton/Wasser mit 0.5 g/l Rhizinusethoxy lat-Emulgator | - | 4 | 20 |
| C8-10 Dimethylamid** | 1 | 20 | 30 |
| C8-10 Dimethylamid** | 3 | 45 | 57 |
| C8-10 Dibutylamid** | 1 | 32 | 72 |
| C8-10 Dibutylamid** | 3 | 67 | 86 |
| C12-14 Dibutylamid** | 1 | 29 | 70 |
| C12-14 Dibutylamid** | 3 | 59 | 85 |

| | | | |
|---|---|---|---|
| * 1.5 g/l Bromoxynil ** mit 0.5 g/l Rhizinusethoxylat-Emulgator | | | |

Der Zusatz der Carbonsäure-Dibutylamide hat zu einer deutlichen, konzentrationsabhängigen Steigerung der Penetration von Bromoxynil geführt. In allen Fällen war der Effekt deutlich dem des C8-10-Carbonsäure-Dimethylamides überlegen.

### Tabelle, Beispiel 7 (nicht erfindungsgemäß)

Der Wirkstoff Spirotetramat wurde in Aceton/Wasser gelöst (0.3 g/l Spirotetramat) und allein oder zusammen mit unterschiedlichen Spritzbrühenkonzentration von C12-14-Carbonsäure-Dibutylamid (emulgiert mit einem Rhizinusethoxylat-Emulgator) appliziert und die Penetration von Spirotetramat gemessen. Die Tabelle zeigt die Penetration nach 3 und 24 Stunden bei 20°C und 60% relativer Luftfeuchte.

| | | **Mittlere Penetration von Spirotetramat* in % (n= 4-8)** | |
|---|---|---|---|
| **Spirotetramat ohne/mit** | Konzentration Carbonsäure-Dibutylamid | 3h | 24h |
| Spiroetramat in Aceton/Wasser ohne Carbonsäure- Dibutylamid | - | 0 | 1 |
| C12-14 Dibutylamid** | 0.2 | 2 | 23 |
| C12-14 Dibutylamid** | 0.5 | 2 | 25 |
| C12-14 Dibutylamid** | 1 | 8 | 39 |
| C12-14 Dibutylamid** | 3 | 13 | 65 |

| | | | |
|---|---|---|---|
| * 0.3 g/l Spirotetramat; **Mit 0.5 g/l Rhizinus-ethoxylat als Emulgator | | | |

Der Zusatz von C12-14-Carbonsäure-Dibutylamid hat zu einer deutlichen, konzentrationsabhängigen Steigerung der Penetration von Spirotetramat geführt.

### Tabelle, Beispiel 8 (nicht erfindungsgemäß)

Der Wirkstoff Spirotetramat wurde formuliert als SC240 in Leitungswasser angesetzt (0.3 g/l Spirotetramat) und allein oder zusammen mit C8-10-Carbonsäure-Dibutylamid, C12-14-Carbonsäure-Dibutylamid oder C16-18-Carbonsäure-Dibutylamid bei einer Spritzbrühenkonzentration von 1 g/l (homogenisert durch Ultraschallbehandlung) appliziert und die Penetration von Spirotetramat gemessen. Die Tabelle zeigt die Penetration nach 3 und 24 Stunden bei 20°C und 60% relativer Luftfeuchte.

| | | **Mittlere Penetration von Spirotetramat* in % (n= 4-8)** | |
|---|---|---|---|
| **Spirotetramat ohne/mit** | Konzentration (g/l) Carbonsäure-Dibutylamid | 3h | 24h |
| Spiroetramat SC240 ohne Carbonsäure- Dibutylamid | - | 1 | 2 |
| C8-10 Dibutylamid | 1 | 11 | 13 |
| C12-14 Dibutylamid | 1 | 4 | 10 |
| C16-18 Dibutylamid | 1 | 4 | 16 |

| | | | |
|---|---|---|---|
| * 0.3 g/l Spirotetramat | | | |

Der Zusatz der drei Carbonsäure Dibutylamide hat zu einer deutlichen Steigerung der Penetration von Spirotetramat geführt.

### Tabelle, Beispiel 9 (nicht erfindungsgemäß)

Der Wirkstoff Kresoxim-methyl wurde in Aceton/Leitungswasser angesetzt (0.3 g/l Kresoxim-methyl) und allein oder zusammen mit C8-10-Carbonsäure-Dibutylamid, C12-14-Carbonsäure-Dibutylamid oder C16-18-Carbonsäure-Dibutylamid bei einer Spritzbrühenkonzentration von 1 bzw. 3 g/l (emulgiert mit 0.4 g/l Tristyrylphenol-Ethoxylat) appliziert und die Penetration von Kresoxim-methyl gemessen. Die Tabelle zeigt die Penetration nach 3 und 24 Stunden bei 20°C und 60% relativer Luftfeuchte.

| | | **Mittlere Penetration von** Kresoxim-methyl * **in % (n= 4-8)** | |
|---|---|---|---|
| Kresoxim-methyl | Konzentration (g/l) Carbonsäure-Dibutylamid | 3h | 24h |
| Kresoxim-methyl in Aceton/Wasser ohne Carbonsäure- Dibutylamid | - | 1 | 3 |
| C8-10 Dibutylamid** | 3 | 60 | 66 |
| C12-14 Dibutylamid** | 1 | 51 | 82 |
| C12-14 Dibutylamid ** | 3 | 68 | 99 |
| C16-18 Dibutylamid** | 3 | 52 | 76 |

| | | | |
|---|---|---|---|
| * 0.3 g/l Kresoxim-methyl, ** mit 0.4 g/l Tristyrylphenol-Ethoxylat | | | |

Der Zusatz der drei Carbonsäure Dibutylamide hat zu einer deutlichen Steigerung der Penetration von Kresoxim-methyl geführt.

### Tabelle, Beispiel 10 (nicht erfindungsgemäß)

Der Wirkstoff Azoxystrobin wurde in Aceton/Leitungswasser angesetzt (0.3 g/l Azoxystrobin) und allein oder zusammen mit C8-10-Carbonsäure-Dibutylamid, C12-14-Carbonsäure-Dibutylamid oder C16-18-Carbonsäure-Dibutylamid bei einer Spritzbrühenkonzentration von 1 bzw. 3 g/l (emulgiert mit 0.4 g/l Tristyrylphenol-Ethoxylat) appliziert und die Penetration von Azoxystrobin gemessen. Die Tabelle zeigt die Penetration nach 3 und 24 Stunden bei 20°C und 60% relativer Luftfeuchte.

| | | **Mittlere Penetration von** Azoxystrobin* **in % (n= 4-8)** | |
|---|---|---|---|
| Variante Azoxystrobin ohne/mit | Konzentration (g/l) Carbonsäure-Dibutylamid | 3h | 24h |
| Azoxystrobin in Aceton/Wasser ohne Carbonsäure-Dibutylamid | - | <1 | 1 |
| C8-10 Dibutylamid** | 3 | 34 | 46 |
| C12-14 Dibutylamid** | 1 | 7 | 14 |
| C12-14 Dibutylamid ** | 3 | 9 | 37 |
| C16-18 Dibutylamid** | 3 | 6 | 36 |

| | | | |
|---|---|---|---|
| * 0.3 g/l Azoxystrobin, ** mit 0.4 g/l Tristyrylphenol-Ethoxylat | | | |

Der Zusatz der drei Carbonsäure Dibutylamide hat zu einer deutlichen Steigerung der Penetration von Azoxystrobin geführt.

### Tabelle, Beispiel 11 (nicht erfindungsgemäß)

Der Wirkstoff Epoxiconazole wurde in Aceton/Leitungswasser angesetzt (0.3 g/l Epoxiconazole) und allein oder zusammen mit C8-10-Carbonsäure-Dibutylamid, C12-14-Carbonsäure-Dibutylamid oder C16-18-Carbonsäure-Dibutylamid bei einer Spritzbrühenkonzentration von 1 bzw. 3 g/l (emulgiert mit 0.4 g/l Tristyrylphenol-Ethoxylat) appliziert und die Penetration von Epoxiconazole gemessen. Die Tabelle zeigt die Penetration nach 3 und 24 Stunden bei 20°C und 60% relativer Luftfeuchte.

| | | **Mittlere Penetration von** Epoxiconazole * **in % (n= 4-8)** | |
|---|---|---|---|
| Variante Epoxiconazole ohne/mit | Konzentration (g/l) Carbonsäure-Dibutylamid | 3h | 24h |
| Epoxiconazole in Aceton/Wasser ohne Carbonsäure- Dibutylamid | - | 1 | 2 |
| C8-10 Dibutylamid** | 3 | 67 | 73 |
| C12-14 Dibutylamid** | 1 | 52 | 96 |
| C12-14 Dibutylamid ** | 3 | 54 | 95 |
| C16-18 Dibutylamid** | 3 | 17 | 95 |

| | | | |
|---|---|---|---|
| * 0.3 g/l Epoxiconazole, ** mit 0.4 g/l Tristyrylphenol-Ethoxylat | | | |

Der Zusatz der drei Carbonsäure Dibutylamide hat zu einer deutlichen Steigerung der Penetration von Epoxiconazole geführt.

### Tabelle, Beispiel 12 (nicht erfindungsgemäß)

Der Wirkstoff Propiconazol wurde in Aceton/Leitungswasser angesetzt (0.3 g/l Propiconazol) und allein oder zusammen mit C12-14-Carbonsäure-Dibutylamid oder C16-18-Carbonsäure-Dibutylamid bei einer Spritzbrühenkonzentration von 1 bzw. 3 g/l (emulgiert mit 0.4 g/l Tristyrylphenol-Ethoxylat) appliziert und die Penetration von Propiconazol gemessen. Die Tabelle zeigt die Penetration nach 3 und 24 Stunden bei 20°C und 60% relativer Luftfeuchte.

| | | **Mittlere Penetration von** Propiconazol * **in % (n= 4-8)** | |
|---|---|---|---|
| Variante Propiconazol ohne/mit | Konzentration (g/l) Carbonsäure-Dibutylamid | 3h | 24h |
| Propiconazol in Aceton/Wasser ohne Carbonsäure- Dibutylamid | - | 4 | 44 |
| C12-14 Dibutylamid** | 1 | 53 | 85 |
| C12-14 Dibutylamid ** | 3 | 72 | 89 |
| C16-18 Dibutylamid** | 3 | 45 | 92 |

| | | | |
|---|---|---|---|
| * 0.3 g/l Propiconazol, ** mit 0.4 g/l Tristyrylphenol-Ethoxylat | | | |

Der Zusatz von C12-14-Carbonsäure-Dibutylamid oder C16-18-Carbonsäure-Dibutylamid hat zu einer deutlichen Steigerung der Penetration von Propiconazol geführt.

### Tabelle, Beispiel 13 (nicht erfindungsgemäß)

Der Wirkstoff Isopyrazam wurde in Aceton/Leitungswasser angesetzt (0.3 g/l Isopyrazam) und allein oder zusammen mit C8-10-Carbonsäure-Dibutylamid, C12-14-Carbonsäure-Dibutylamid oder C16-18-Carbonsäure-Dibutylamid bei einer Spritzbrühenkonzentration von 1 bzw. 3 g/l (emulgiert mit 0.4 g/l Tristyrylphenol-Ethoxylat) appliziert und die Penetration von Isopyrazam gemessen. Die Tabelle zeigt die Penetration nach 3 und 24 Stunden bei 20°C und 60% relativer Luftfeuchte.

| | | **Mittlere Penetration von** Isopyrazam * **in % (n= 4-8)** | |
|---|---|---|---|
| Variante Isopyrazam ohne/mit | Konzentration (g/l) Carbonsäure-Dibutylamid | 3h | 24h |
| Isopyrazam in Aceton/Wasser ohne Carbonsäure- Dibutylamid | - | 1 | 2 |
| C8-10 Dibutylamid** | 3 | 37 | 87 |
| C12-14 Dibutylamid** | 1 | 11 | 54 |
| C12-14 Dibutylamid ** | 3 | 12 | 49 |
| C16-18 Dibutylamid** | 3 | 10 | 35 |

| | | | |
|---|---|---|---|
| * 0.3 g/l Isopyrazam, ** mit 0.4 g/l Tristyrylphenol-Ethoxylat | | | |

Der Zusatz der drei Carbonsäure Dibutylamide hat zu einer deutlichen Steigerung der Penetration von Isopyrazam geführt.

### Tabelle, Beispiel 14 (nicht erfindungsgemäß)

Der Wirkstoff Indaziflam (formuliert als SC500) wurde in Leitungswasser angesetzt (0.3 g/l Indaziflam) und allein oder zusammen mit C8-10-Carbonsäure-Dibutylamid, C12-14-Carbonsäure-Dibutylamid oder C16-18-Carbonsäure-Dibutylamid bei einer Spritzbrühenkonzentration von 2.5 g/l (emulgiert mit Rhizinus-Ethoxylat oder Tristyrylphenol-Ethoxylaten) appliziert und die Penetration von Indaziflam gemessen. Die Tabelle zeigt die Penetration nach 24 und 48 Stunden bei 20°C und 60% relativer Luftfeuchte.

| | | **Mittlere Penetration von** Indaziflam * **in % (n= 4-8)** | |
|---|---|---|---|
| Variante Indaziflam ohne/mit | Konzentration (g/l) Carbonsäure-Dibutylamid | 24h | 48h |
| Indaziflam SC500 in Wasser ohne Carbonsäure-Dibutylamid | - | 3 | 6 |
| C8-10 Dibutylamid** C12-14 ** | 2.5 | 26 | 34 |
| Dibutylamid | 2.5 | 27 | 49 |
| C16-18 Dibutylamid** | 2.5 | 8 | 17 |
| C16-18 Dibutylamid*** | 2.5 | 14 | 70 |
| C16-18 Dibutylamid**** | 2.5 | 40 | 77 |

| | | | |
|---|---|---|---|
| * 0.3 g/l Indaziflam, ** Mit 0.5 g/l Rhizinus-ethoxylat als Emulgator, *** Mit 0.5 g/ Tristyrylphenol-Ethoxylat 16 (***) bzw. 29 EO (****) | | | |

Der Zusatz der drei Carbonsäure Dibutylamide hat zu einer deutlichen Steigerung der Penetration von Indaziflam geführt.

### Tabelle, Beispiel 15

Der Wirkstoff Prothioconazol wurde in Aceton/Leitungswasser angesetzt (0.3 g/l Prothioconazole) und allein oder zusammen mit C12-14-Carbonsäure-Dibutylamid oder C16-18-Carbonsäure-Dibutylamid bei einer Spritzbrühenkonzentration von 1 g/l (emulgiert durch Ultraschallbehandlung) appliziert und die Penetration von Prothioconazol gemessen. Die Tabelle zeigt die Penetration nach 3 und 24 Stunden bei 25°C und 60% relativer Luftfeuchte.

| | | **Mittlere Penetration von Prothioconazole* in % (n= 4-8)** | |
|---|---|---|---|
| **Variante Prothioconazole ohne/mit** | Konzentration (g/l) Carbonsäure-Dibutylamid | 3h | 24h |
| Prothioconazole in Aceton/Wasser | - | 1 | 2 |
| C12-14 Dibutylamid | 1 | 1 | 11 |
| C16-18 Dibutylamid | 1 | 5 | 18 |

| | | | |
|---|---|---|---|
| * 0.3 g/l Prothioconazole | | | |

Der Zusatz der beiden Carbonsäure-Dibutylamide hat zu einer deutlichen Steigerung der Penetration von Prothioconazol geführt.

### Tabelle, Beispiel 16

### Vergleich der erfindungsgemäß eingesetzten Carbonsäure-Dibutylamide gegenüber den Carbonsäure-Dimethylamid aus dem Stand der Technik:

Die nachfolgende Tabelle zeigt den Vergleich der Penetration von Prothioconazole aus der Handelsformulierung oder einer neuen erfindungsgemäßen Zusammensetzung, wo 20% des Lösungsmittel C8-10-Carbonsäure-Dimethylamid durch C16-18-Carbonsäure-Dibutylamid ersetzt worden ist (Angabe in Massenprozent) mit 25% Prothioconazole

### Formulierung A:

20% Emulgator KS
20% C16-18-Carbonsäure-Dibutylamid
34.9% C8-10-Carbonsäure-Dimethylamid
0.1% Entschäumer

Der Wirkstoff Prothioconazole wurde formuliert als kommerzieller Standard EC250 oder mit der erfindungsgemäßen Formulierung in Leitungswasser angesetzt (0.3 g/l Prothioconazole) und die Penetration von Prothioconazole gemessen in einem Versuch beim dem am ersten Tag 15°C und 80% relative Luftfeuchte und am zweiten Tag 25° und 60% eingestellt waren. Die Tabelle zeigt die Penetration nach 12 und 24 Stunden bei 25°C und 60% relativer Luftfeuchte.

| | **Mittlere Penetration von Prothioconazole* in % (n= 4-8)** | | | |
|---|---|---|---|---|
| **Variante** | 12 h | 24 h | 36 h | 48 h |
| Standard EC250 Formulierung | 3 | 4 | 6 | 8 |
| Erfindungsgemäße EC250 Formulierung A | 6 | 10 | 19 | 23 |

| | | | | |
|---|---|---|---|---|
| * 0.3 g/l Prothioconazole | | | | |

Das Beispiel zeigt, dass die erfindungsgemäß eingesetzten Carbonsäure-Dibutylamide zu einer verstärkten Penetration gegenüber den Carbonsäure-Dimethylamid aus dem Stand der Technik führen.

### Tabelle, Beispiel 17

### Vergleich der erfindungsgemäß eingesetzten Carbonsäure-Dibutylamide gegenüber den Carbonsäure-Dimethylamid aus dem Stand der Technik:

Der Wirkstoff Prothioconazole wurde in Aceton/Leitungswasser angesetzt (0.8 g/l Prothioconazole) und zusammen mit C8-10-Carbonsäure-Dimethylamid (1.5 g/l) allein oder mit Zusatz (0.5 g/l oder 1 g/l im Ansatz) von erfindungsgemäßem C8-10-Carbonsäure-Dibutylamid, C12-14-Carbonsäure-Dibutylamid oder C16-18-Carbonsäure-Dibutylamid (jeweils mit mit 0.4 g/l Tristyrylphenol-Ethoxylat) appliziert und die Penetration von Prothioconazole gemessen. Die Tabelle zeigt die Penetration nach 3 und 24 Stunden bei 20°C und 60% relativer Luftfeuchte.

| | | **Mittlere Penetration von Prothioconazole* in % (n= 4-8)** | |
|---|---|---|---|
| **Variante Prothioconazole ohne/mit** | Konzentration (g/l) Carbonsäure-Dibutylamid | 3h | 24h |
| Prothioconazole in Aceton/ Wasser mit 1.5g/l C8-C10 Carbonsäure Dimethylamid** | - | 1.3 (n=21) | 3.7 (n=21) |
| C8-10 Dibutylamid** | 0.5 | 2.1 | 6.3 |
| C8-10 Dibutylamid** | 1 | 2.5 | 9.3 |
| C12-14 Dibutylamid** | 0.5 | 2.0 | 9.4 |
| C12-14 Dibutylamid** | 1 | 4.2 | 16.6 |
| C16-18 Dibutylamid** | 0.5 | 2.1 | 7.4 |
| C16-18 Dibutylamid** | 1 | 3.2 | 17.9 |

| | | | |
|---|---|---|---|
| * 0.8 g/l Prothioconazole, ** mit 0.4 g/l Tristyrylphenol-Ethoxylat | | | |

Der Zusatz der drei Carbonsäure Dibutylamide zu einer Lösung von Prothioconazole schon enthaltend eine höheren Menge an C8-C10 Carbonsäure Dimethylamid hat zu einer deutlichen, stärkeren und konzentrationsabhängigen Steigerung der Penetration von Prothioconazol geführt.

### Tabelle, Beispiel 18

### Steigerung der fungiziden Wirkung von Proline in Weizen mit C16-18-Carbonsäure-Dibutylamid

In zwei Feldversuchen wurde der Einfluß von C16-18 Carbonsäure Dibutylamid auf die fungizide Wirksamkeit von Proline EC250 gegen mehrere pathogene Schadpilze getestet. Die Feldversuche wurden in Winterweizen angelegt in einem Feld bei Burscheid, Deutschland. Die Versuche waren randomisiert mit drei Wiederholungen und eine Testparzelle hatte eine Fläche von 6m². Pflanzeitpunkt war der 20.10.2009 bzw. 21.10.2009. Sonstige Düngung und Pflanzenschutzmaßnahmen wurden gesetzt wie es der landwirtschaftlichen Praxis entsprach.

Die Testsubstanzen wurden zweimal nacheinander appliziert in den Getreide-Wachstumsstadien EC32 und EC39. Das Intervall war 2 bzw. 3 Wochen. Prothioconazole wurde als EC 250 Formulierung (Handelsname Proline) eingesetzt, das C16-18-Carbonsäure-Dibutylamid als EC500. Proline wurde entweder allein oder mit Tankmix-Zusatz von C16-18-Carbonsäure-Dibutylamid verwendet. Der Wasseraufwand bei der Spritzapplikation war 300 l/ha.

Der Grad des Krankheitsbefalls auf den Weizenblätter und die Krankheitskontrolle (Wirkung) wurde am 30.Juni und 1.Juli 2010 bonitiert, d.h. etwa 4 Wochen nach der zweiten Fungizid-Applikation. Der Einfluß von C16-18-Carbonsäure-Dibutylamid auf die Wirkungssteigerung von Proline zeigt die folgende Tabelle

| | | Versuch 1 | | Versuch 2 |
|---|---|---|---|---|
| | Pathogen | Leptosphaeria nodorum | Puccina recondita | Pyrenophora teres |
| Variante | Wirkstoffmenge pro Hektar | Wirkung nach Abbott (%) | | |
| Unbehandelt (Befall) | - | 14 | 5 | 5 |
| Proline | 75 | 67 | 72 | 70 |
| Proline + 0.1% C16-18-Carbonsäure-Dibutylamid * | 75 | 85 | 99 | 91 |

| | | | | |
|---|---|---|---|---|
| * 0.2% C16-18-Carbonsäure-Dibutylamid EC500 ist ein C16-C18-Carbonsäure- Dibutylamid | | | | |

Das Ergebnis zeigt, dass schon eine Konzentration von 0.1% C16-C18-Carbonsäure- Dibutylamid signifikant die fungizide Wirkung von Proline steigert.

### Tabelle, Beispiel 19 (nicht erfindungsgemäß)

### Steigerung der herbiziden Wirksamkeit von Indaziflam mit C12-14-Carbonsäure-Dibutylamid:

Zwei Feldversuche wurden durchgeführt um den Einfluß von C12-14 Dibutylamid auf die herbizide Wirksamkeit des Herbizides Indaziflam zu untersuchen. Die Feldversuche wurden (1) in Fresno (Kalifornien, USA) und (2) Mereville (Frankreich) angelegt. Beide Produkte wurden auf eine natürliche Mischverunkrautung ausgebracht. Die Parzellengrösse in Versuch 1 betrug 9,3 qm und jene in Versuch 2 betrug 6 qm. Die Unkrautpflanzen wurden in einem frühen Entwicklungsstadium (die gemessene Pflanzenhöhe je nach Unkrautspezies betrug 2 cm bis 7 cm) mit den Produkten behandelt. Hierzu wurden die zu applizierenden Produkte in Wasser aufgelöst und verdünnt und dann mit 187 Liter pro Hektar (Versuch 1) und 250 Liter pro Hektar (Versuch 2) als Spritzlösung direkt auf die Unkrautpflanzen gesprüht.

In beiden Feldversuchen wurde Indaziflam SC500 als Soloprodukt im Vergleich zu Indaziflam SC500 in Tankmischung mit 0.5 Liter pro Hektar C12-14-Carbonsäure-Dibutylamid geprüft. In Versuch 1 betrug die Aufwandmenge von Indaziflam (formuliert als SC500) 50 Gramm Aktivsubstanz pro Hektar und in Versuch 2 waren es 75 Gramm Aktivsubstanz pro Hektar. Die Mischverunkrautung bestand aus folgenden monokotylen Unkräutern: Digitaria sanguinalis (DIGSA), Lolium multiflorum (LOLMU), Setaria glauca (PESGL) und Setaria verticillata (SETVE), und aus folgenden dikotylen Unkräutern: Amaranthus retroflexus (AMARE), Abutilon theophrasti (ABUTH), Chenopodium album (CHEAL), Fallopia convolvulus (POLCO).

Die herbizide Wirkung der Produkte wurde visuell im Vergleich zur unbehandelten Kontrolle bonitiert. Dabei wurde die herbizide Wirkung in Prozent (%) ausgedrückt: 100 % herbizide Wirkung = Unkrautpflanzen sind komplett abgestorben; 0 % Wirkung = wie Kontrollpflanzen). Der Versuch 1 wurde 7 Tage nach der Applikation der Produkte bonitiert und der Versuch 2 wurde 28 Tage nach der Applikation bonitiert. Die jeweiligen Ergebnisse der Feldversuche sind in Tabelle 1 (Feldversuch 1) und in Tabelle 2 (Feldversuch 2) dargestellt.

**Tabelle 19a:**

| Unkrautkontrollenach Abbott(%) | Wirkstoffmenge pro Hektar (g/ha) | AMARE | CHEAL | PESGL | LOLMU | ABUTH |
|---|---|---|---|---|---|---|
| Indaziflam | 50 | 46 | 28 | 43 | 53 | 55 |
| Indaziflam + C12-14 Dibutylamid | 50 | 88 | 73 | 82 | 83 | 85 |

**Tabelle19b:**

| Unkrautkontrollenach Abbott(%) | Wirkstoffmenge pro Hektar (g/ha) | POLCO | CHEAL | SETVE | DIGSA |
|---|---|---|---|---|---|
| Indaziflam | 75 | 15 | 10 | 45 | 15 |
| Indaziflam + C12-14 Dibutylamid | 75 + 0.5 L/ha | 63 | 86 | 55 | 80 |

In beiden Feldversuchen konnte gezeigt werden, dass die Zugabe von 0,5 liter pro Hektar C12-14-Carbonsäure-Dibutylamid zu dem Herbizid Indaziflam die Wirksamkeit auf Unkräuter signifikant steigert.

### Beispiel 20: Bedeckungsgrad

Überraschenderweise wurde auch gefunden, dass die nicht wasserlöslichen Carbonsäure-Dibutylamide den Bedeckungsgrad - den Anteil der mit der Spritzflüssigkeit bedeckten Pflanzenoberfläche bei der Spritzapplikation - nach Emulsion mit verschiedenen Emulgatoren deutlich erhöhen. So wurde bei der Spritzapplikation mit einer Luftinjektordüse (TeeJet AI11003, 200L/ha) auf Mais mit 2 g/l einer Emulsion von C12-14-Carbonsäure-Dibutylamid oder C16-18-Carbonsäure-Dibutylamid (mit 0.5 g/l Sorbitanester-ethoxylat emulgiert) der Bedeckungsgrad von 1.1% (Anteil der benetzten Fläche in Bezug auf die behandelte Pflanzenfläche) für Wasser auf 18.5% (C12-14-Carbonsäure-Dibutylamid) bzw. 17.9% (C16-18-Carbonsäure-Dibutylamid). Der Wert des Emulgators allein lag bei 7.3%.

### Tabelle, Beispiel 21 (nicht erfindungsgemäß)

Der Wirkstoff Fluopyram wurde als EC-Formulierung im Labor angesetzt: Fluopyram wird in einer Vormischung aus Lösemittel und Emulgator (Dimethylacetamid + Tanemul PS16) gelöst und mit Wasser zur gebrauchsfertigen Testlösung verdünnt. Die Testlösung enthält 0.5g/l Wirkstoff, 0.5g/l Emulgator und 2 Gew.-% Lösemittel. Sie wird allein oder zusammen mit C16-18-Carbonsäure-Dibutylamid oder C18-Carbonsäure-Dimethylamid bei einer Spritzbrühenkonzentration von 1.5g/l (emulgiert durch Ultraschallbehandlung) auf isolierte Apfelblattkutikeln appliziert und die Penetration von Fluopyram gemessen. Die Tabelle zeigt die Penetration nach 6 und 24 Stunden bei 25°C und 60% relativer Luftfeuchte.

| | | **Mittlere Penetration von Fluopyram in % (n=8-10)** | |
|---|---|---|---|
| **Testlösung** | Konzentration (g/l) Carbonsäureamid | 6h | 24h |
| Fluopyram (0.5g/l) | - | 20 | 53 |
| Fluopyram & C16-18 Dibutylamid | 1.5 | 84 | 95 |
| Fluopyram & C18 Dimethylamid | 1.5 | 34 | 51 |

Der Zusatz des C16-C18-Carbonsäure-Dibutylamids führt im Vergleich zum entsprechenden Dimethylamid zu einer stärkeren Steigerung der Penetration von Fluopyram.

### Tabelle, Beispiel 22

### Eigenpenetration der Carbonsäuredibutylamide

Die C16-C18- und die C12-C14-Alkyl- /Alkenyl-Carbonsäuredibutylamide und die analogen Dimethylamide wurden als EC-Formulierungen im Labor angesetzt: Sie werden in einer Vormischung aus Lösemittel und Emulgator (Dimethylacetamid + Tanemul PS16) gelöst und mit Wasser zur gebrauchsfertigen Testlösung verdünnt (emulgiert durch Ultraschallbehandlung). Die Testlösungen enthalten jeweils 1.5g/l Carbonsäureamid, 0.5g/l Emulgator und 2 Gew.-% Lösemittel. Sie werden auf isolierte Apfelblattkutikeln appliziert und anschließend wird die Eigenpenetration der Carbonsäureamide gemessen. Die Tabelle zeigt die Penetration nach 6 und 24 Stunden bei 25°C und 60% relativer Luftfeuchte.

| | | **Penetration Carbonsäureamid in % (n=8-10)** | |
|---|---|---|---|
| **Testlösung** | Konzentration (g/l) Carbonsäureamid | 6h | 24h |
| C16-18 Dibutylamid | 1.5 | 0 | 0 |
| C18-Dimethylamid | 1.5 | 22 | 61 |
| C12-14 Dibutylamid | 1.5 | 2 | 4 |
| C12-Dimethylamid | 1.5 | 49 | 47 |

Die Eigenpenetration der Carbonsäuredimethylamide ist wesentlich größer als die der analogen Dibutylamide. Das C16-18 Dibutylamid penetriert überhaupt nicht messbar.

### Formulierbeispiele

Folgende erfindungsgemäße Formulierungen wurden durch Vermischen der einzelnen Komponenten hergestellt.

### Formulierbeispiel 1 (nicht erfindungsgemäß)

Zur Herstellung der ordnungsgemäßen Erfindung mit dem Wirkstoff Tebuconazol werden zunächst
20 g Tebuconazol vermischt mit
56 g N,N-Dimethyldecanamid und dann mit
10 g Ethoxypropoxy-tristyryl-phenol (Blockcopolymer),
4 g Wasser und
10 g C16-C18-Carbonsäure-Dibutylamid
bei Raumtemperatur unter Rühren vermischt. Nach beendeter Zugabe wird weitere 4 Stunden bei Raumtemperatur gerührt. Mann erhält auf diese Weise eine homogene Lösung.

### Formulierbeispiel 2 (nicht erfindungsgemäß)

Zur Herstellung der ordnungsgemäßen Erfindung mit dem Wirkstoff Tebuconazol werden zunächst
20 g Tebuconazol vermischt mit
51 g N,N-Dimethyldecanamid und dann mit
10 g Ethoxypropoxy-tristyryl-phenol (Blockcopolymer),
4 g Wasser und
15 g C16 -C18-Carbonsäure-Dibutylamid
bei Raumtemperatur unter Rühren vermischt. Nach beendeter Zugabe wird weitere 4 Stunden bei Raumtemperatur gerührt. Mann erhält auf diese Weise eine homogene Lösung.

### Formulierbeispiel 3 (nicht erfindungsgemäß)

Zur Herstellung der ordnungsgemäßen Erfindung mit dem Wirkstoff Tebuconazol werden zunächst
20 g Tebuconazol vermischt mit
52 g N,N-Dimethyldecanamid und dann mit
3 g Ethoxypropoxy-tristyryl-phenol (Blockcopolymer),
10 g Rizinusölpolyglycoletherester und
15 g C16 -C18-Carbonsäure-Dibutylamid
bei Raumtemperatur unter Rühren vermischt. Nach beendeter Zugabe wird weitere 4 Stunden bei Raumtemperatur gerührt. Mann erhält auf diese Weise eine homogene Lösung.

### Formulierbeispiel 4 (nicht erfindungsgemäß)

Zur Herstellung der ordnungsgemäßen Erfindung mit dem Wirkstoff Epoxiconazol werden zunächst
10 g Epoxiconazol vermischt mit
65 g Benzylalkohol und dann mit
7,5 g Ethoxypropoxy-tristyryl-phenol (Blockcopolymer),
7,5 g Rizinusölpolyglycoletherester und
10 g C16-C18-Carbonsäure-Dibutylamid
bei Raumtemperatur unter Rühren vermischt. Nach beendeter Zugabe wird weitere 4 Stunden bei Raumtemperatur gerührt. Mann erhält auf diese Weise eine homogene Lösung.

### Formulierbeispiel 5 (nicht erfindungsgemäß)

Zur Herstellung der ordnungsgemäßen Erfindung mit dem Wirkstoff Epoxiconazol werden zunächst
10 g Epoxiconazol vermischt mit
50 g Benzylalkohol und dann mit
10 g 2-sek-Butylphenol,
7,5 g Ethoxypropoxy-tristyryl-phenol (Blockcopolymer),
7,5 g Rizinusölpolyglycoletherester und
15 g C16 -C18-Carbonsäure-Dibutylamid
bei Raumtemperatur unter Rühren vermischt. Nach beendeter Zugabe wird weitere 4 Stunden bei Raumtemperatur gerührt. Mann erhält auf diese Weise eine homogene Lösung.

### Formulierbeispiel 6 (nicht erfindungsgemäß)

Zur Herstellung der ordnungsgemäßen Erfindung mit dem Wirkstoff Fluoxastrobin werden zunächst
10 g Fluoxastrobin vermischt mit
35 g Gamma-Butyrolacton und dann mit
15 g 2-Ethylhexanol-propylenethylen-glycolether,
15 g Ethoxypropoxy-tristyryl-phenol (Blockcopolymer),
10 g Alkoxyliertes Ethylendiamin mit durchschnittlich 16 EO und 16 PO Einheiten,
5 g Tristyrl-phenol-ethoxylat mit durchschnittlich 16 EO Einheiten und
10 g C16-C18-Carbonsäure-Dibutylamid
bei Raumtemperatur unter Rühren vermischt. Nach beendeter Zugabe wird weitere 4 Stunden bei Raumtemperatur gerührt. Mann erhält auf diese Weise eine homogene Lösung.

### Formulierbeispiel 7 (nicht erfindungsgemäß)

Zur Herstellung der ordnungsgemäßen Erfindung mit dem Wirkstoff Fluoxastrobin werden zunächst
10 g Fluoxastrobin vermischt mit
30 g Gamma-Butyrolacton und dann mit
15 g 2-Ethylhexanol-propylenethylen-glycolether,
15 g Ethoxypropoxy-tristyryl-phenol (Blockcopolymer),
10 g Alkoxyliertes Ethylendiamin mit durchschnittlich 16 EO und 16 PO Einheiten,
5 g Tristyrl-phenol-ethoxylat mit durchschnittlich 16 EO Einheiten und
15 g C16 -C18-Carbonsäure-Dibutylamid
bei Raumtemperatur unter Rühren vermischt. Nach beendeter Zugabe wird weitere 4 Stunden bei Raumtemperatur gerührt. Mann erhält auf diese Weise eine homogene Lösung.

### Formulierbeispiel 8 (nicht erfindungsgemäß)

Zur Herstellung der ordnungsgemäßen Erfindung mit dem Wirkstoff Azoxystrobin werden zunächst
10 g Azoxystrobin vermischt mit
35 g Gamma-Butyrolacton und dann mit
15 g 2-Ethylhexanol-propylenethylen-glycolether,
15 g Ethoxypropoxy-tristyryl-phenol (Blockcopolymer),
10 g Alkoxyliertes Ethylendiamin mit durchschnittlich 16 EO und 16 PO Einheiten,
5 g Tristyrl-phenol-ethoxylat mit durchschnittlich 16 EO Einheiten und
10 g C16-C18-Carbonsäure-Dibutylamid
bei Raumtemperatur unter Rühren vermischt. Nach beendeter Zugabe wird weitere 4 Stunden bei Raumtemperatur gerührt. Mann erhält auf diese Weise eine homogene Lösung.

### Formulierbeispiel 9 (nicht erfindungsgemäß)

Zur Herstellung der ordnungsgemäßen Erfindung mit dem Wirkstoff Azoxystrobin werden zunächst
10 g Azoxystrobin vermischt mit
30 g Gamma-Butyrolacton und dann mit
15 g 2-Ethylhexanol-propylenethylen-glycolether,
15 g Ethoxypropoxy-tristyryl-phenol (Blockcopolymer),
10 g Alkoxyliertes Ethylendiamin mit durchschnittlich 16 EO und 16 PO Einheiten,
5 g Tristyrl-phenol-ethoxylat mit durchschnittlich 16 EO Einheiten und
15 g C16 -C18-Carbonsäure-Dibutylamid
bei Raumtemperatur unter Rühren vermischt. Nach beendeter Zugabe wird weitere 4 Stunden bei Raumtemperatur gerührt. Mann erhält auf diese Weise eine homogene Lösung.

### Formulierbeispiel 10 (nicht erfindungsgemäß)

Zur Herstellung der ordnungsgemäßen Erfindung mit dem Wirkstoff Trifloxystrobin werden zunächst
10 g Trifloxystrobin vermischt mit
44,97 g N-Methylpyrolidon und dann mit 10 g Tristyrl-phenol-ethoxylat mit durchschnittlich 16 EO Einheiten,
2,5 g Tristyrl-phenol-ethoxylat-Salz mit durchschnittlich 16 EO Einheiten,
12,5 g Butoxypolyethylen-propylenglycol (Blockcopolymer),
0,03 g Silikon-Antischaum-Emulsion und
20 g C16 -C18-Carbonsäure-Dibutylamid
bei Raumtemperatur unter Rühren vermischt. Nach beendeter Zugabe wird weitere 4 Stunden bei Raumtemperatur gerührt. Mann erhält auf diese Weise eine homogene Lösung.

### Formulierbeispiel 11

Zur Herstellung der ordnungsgemäßen Erfindung mit dem Wirkstoff Prothioconazol werden zunächst
25 g Prothioconazol vermischt mit
34,9 g N,N-Dimethyldecanamid und dann mit
20 g Rizinusölpolyglycoletherester,
0,1 g Silikon-Antischaum-Emulsion und
20 g C16-C18-Carbonsäure-Dibutylamid
bei Raumtemperatur unter Rühren vermischt. Nach beendeter Zugabe wird weitere 4 Stunden bei Raumtemperatur gerührt. Mann erhält auf diese Weise eine homogene Lösung.

### Formulierbeispiel 12

Zur Herstellung der ordnungsgemäßen Erfindung mit dem Wirkstoff Prothioconazol werden zunächst
25 g Prothioconazol vermischt mit
39,9 g N,N-Dimethyldecanamid und dann mit
10 g Ethoxypropoxy-tristyryl-phenol (Blockcopolymer),
10 g Tristyrl-phenol-ethoxylat mit durchschnittlich 16 EO Einheiten und
0,1 g Silikon-Antischaum-Emulsion und
15 g C16 -C18-Carbonsäure-Dibutylamid
bei Raumtemperatur unter Rühren vermischt. Nach beendeter Zugabe wird weitere 4 Stunden bei Raumtemperatur gerührt. Mann erhält auf diese Weise eine homogene Lösung.

### Formulierbeispiel 13 (nicht erfindungsgemäß)

Zur Herstellung der ordnungsgemäßen Erfindung mit dem Wirkstoff Bixafen werden zunächst
10 g Bixafen vermischt mit
45 g N,N-Dimethyldecanamid und dann mit
10 g aromatisches Kohlenwasserstoffgemisch, Naphalin reduziert,
10 g 2-Ethylhexanol-propylenethylen-glycolether,
10 g Rizinusölpolyglycoletherester,
5 g Ethoxypropoxy-tristyryl-phenol (Blockcopolymer) und
10 g C16-C18-Carbonsäure-Dibutylamid
bei Raumtemperatur unter Rühren vermischt. Nach beendeter Zugabe wird weitere 4 Stunden bei Raumtemperatur gerührt. Mann erhält auf diese Weise eine homogene Lösung.

### Formulierbeispiel 14 (nicht erfindungsgemäß)

Zur Herstellung der ordnungsgemäßen Erfindung mit dem Wirkstoff Bixafen werden zunächst
10 g Bixafen vermischt mit
40 g N,N-Dimethyldecanamid und dann mit
10 g aromatisches Kohlenwasserstoffgemisch, Naphalin reduziert,
10 g 2-Ethylhexanol-propylenethylen-glycolether,
10 g Rizinusölpolyglycoletherester,
5 g Ethoxypropoxy-tristyryl-phenol (Blockcopolymer) und
15 g C16 -C18-Carbonsäure-Dibutylamid
bei Raumtemperatur unter Rühren vermischt. Nach beendeter Zugabe wird weitere 4 Stunden bei Raumtemperatur gerührt. Mann erhält auf diese Weise eine homogene Lösung.

### Formulierbeispiel 15 (nicht erfindungsgemäß)

Zur Herstellung der ordnungsgemäßen Erfindung mit dem Wirkstoff Bixafen werden zunächst
10 g Bixafen vermischt mit
40 g N,N-Dimethyldecanamid und dann mit
5 g aromatisches Kohlenwasserstoffgemisch, Naphalin reduziert,
10 g 2-Ethylhexanol-propylenethylen-glycolether,
10 g Rizinusölpolyglycoletherester,
5 g Ethoxypropoxy-tristyryl-phenol (Blockcopolymer) und
20 g C16-C18-Carbonsäure-Dibutylamid
bei Raumtemperatur unter Rühren vermischt. Nach beendeter Zugabe wird weitere 4 Stunden bei Raumtemperatur gerührt. Mann erhält auf diese Weise eine homogene Lösung.

### Formulierbeispiel 16 (nicht erfindungsgemäß)

Zur Herstellung der ordnungsgemäßen Erfindung mit dem Wirkstoff Isopyrazam werden zunächst
10 g Isopyrazam vermischt mit
45 g N,N-Dimethyldecanamid und dann mit
10 g aromatisches Kohlenwasserstoffgemisch, Naphalin reduziert,
10 g 2-Ethylhexanol-propylenethylen-glycolether,
10 g Rizinusölpolyglycoletherester,
5 g Ethoxypropoxy-tristyryl-phenol (Blockcopolymer) und
10 g C16-C18-Carbonsäure-Dibutylamid
bei Raumtemperatur unter Rühren vermischt. Nach beendeter Zugabe wird weitere 4 Stunden bei Raumtemperatur gerührt. Mann erhält auf diese Weise eine homogene Lösung.

### Formulierbeispiel 17 (nicht erfindungsgemäß)

Zur Herstellung der ordnungsgemäßen Erfindung mit dem Wirkstoff Isopyrazam werden zunächst
10 g Isopyrazam vermischt mit
40 g N,N-Dimethyldecanamid und dann mit
10 g aromatisches Kohlenwasserstoffgemisch, Naphalin reduziert,
10 g 2-Ethylhexanol-propylenethylen-glycolether,
10 g Rizinusölpolyglycoletherester,
5 g Ethoxypropoxy-tristyryl-phenol (Blockcopolymer) und
15 g C16 -C18-Carbonsäure-Dibutylamid
bei Raumtemperatur unter Rühren vermischt. Nach beendeter Zugabe wird weitere 4 Stunden bei Raumtemperatur gerührt. Mann erhält auf diese Weise eine homogene Lösung.

### Formulierbeispiel 18 (nicht erfindungsgemäß)

Zur Herstellung der ordnungsgemäßen Erfindung mit dem Wirkstoff Fluxapyroxad werden zunächst
10 g Fluxapyroxad vermischt mit
45 g N,N-Dimethyldecanamid und dann mit
10 g aromatisches Kohlenwasserstoffgemisch, Naphalin reduziert,
10 g 2-Ethylhexanol-propylenethylen-glycolether,
10 g Rizinusölpolyglycoletherester,
5 g Ethoxypropoxy-tristyryl-phenol (Blockcopolymer) und
10 g C16-C18-Carbonsäure-Dibutylamid
bei Raumtemperatur unter Rühren vermischt. Nach beendeter Zugabe wird weitere 4 Stunden bei Raumtemperatur gerührt. Mann erhält auf diese Weise eine homogene Lösung.

### Formulierbeispiel 19 (nicht erfindungsgemäß)

Zur Herstellung der ordnungsgemäßen Erfindung mit dem Wirkstoff Fluxapyroxad werden zunächst
10 g Fluxapyroxad vermischt mit
40 g N,N-Dimethyldecanamid und dann mit
10 g aromatisches Kohlenwasserstoffgemisch, Naphalin reduziert,
10 g 2-Ethylhexanol-propylenethylen-glycolether,
10 g Rizinusölpolyglycoletherester,
5 g Ethoxypropoxy-tristyryl-phenol (Blockcopolymer) und
15 g C16 -C18-Carbonsäure-Dibutylamid
bei Raumtemperatur unter Rühren vermischt. Nach beendeter Zugabe wird weitere 4 Stunden bei Raumtemperatur gerührt. Mann erhält auf diese Weise eine homogene Lösung.

### Formulierbeispiel 20

Zur Herstellung der ordnungsgemäßen Erfindung als Tank-Mix-Additiv werden zunächst
50 g C16 -C18-Carbonsäure-Dibutylamid vermischt mit
25 g Rizinusölpolyglycoletherester und dann mit
25 g Benzylalkohol
bei Raumtemperatur unter Rühren vermischt. Nach beendeter Zugabe wird weitere 2 Stunden bei Raumtemperatur gerührt. Mann erhält auf diese Weise eine homogene Lösung.

### Formulierbeispiel 21

Zur Herstellung der ordnungsgemäßen Erfindung mit dem Wirkstoff Prothioconazol werden zunächst
20 g Prothioconazol vermischt mit
44,9 g N,N-Dimethyldecanamid und dann mit
15 g 2-Ethylhexanol-propylenethylen-glycolether,
10 g Rizinusölpolyglycoletherester,
5 g Ethoxypropoxy-tristyryl-phenol (Blockcopolymer)
0,1 g Silikon-Antischaum-Emulsion und
5 g C16 -C18-Carbonsäure-Dibutylamid
bei Raumtemperatur unter Rühren vermischt. Nach beendeter Zugabe wird weitere 4 Stunden bei Raumtemperatur gerührt. Mann erhält auf diese Weise eine homogene Lösung.

## Patentansprüche

1. Verwendung von Carbonsäureamiden der Formel (I)
R¹-CO-NR²R³ (I),
worin
R¹ C₁₆-C₁₈-Alkyl oder C₁₆-C₁₈-Alkenyl bedeutet und
R² C₄-Alkyl bedeutet und
R³ C₄-Alkyl bedeutet
zur Förderung der Penetration von Prothioconazole in Pflanzen.

2. Verwendung nach Anspruch 1, bei der die Carbonsäureamide der Formel (I) dem agrochemischen Wirkstoff Prothioconazole als Tank-Mix-Additiv zugesetzt werden.

3. Agrochemische Formulierungen in Form von Emulsionskonzentraten oder Dispersionen in Öl enthaltend
∘Prothioconazole sowie
∘ mindestens ein Carbonsäureamid der Formel (I)
R¹-CO-NR²R³ (I),
worin
R¹ C₁₆-C₁₈-Alkyl oder C₁₆-C₁₈-Alkenyl bedeutet und
R² C₄-Alkyl bedeutet und
R³ C₄-Alkyl bedeutet, sowie
∘ mindestens ein Lösemittel und / oder Öl.

4. Agrochemische Formulierung nach Anspruch 3, bei dem der Gehalt des mindestens einen Carbonsäureamids der Formel (I) in der agrochemischen Formulierung
∘ 1 bis 50 Gew.-% beträgt.

5. Agrochemische Formulierungen nach Anspruch 3 enthaltend
• 15 - 35 Gew.-% Prothioconazol und
• 25 - 45 Gew.-% N,N-Dimethyldecanamid und
• 10 - 40 Gew.-% eines oder mehrerer Emulgatoren und
• 0,01 - 1,0 Gew.-% Entschäumer, und
• 5 - 30 Gew.-% C16 -C18-Alkyl-Carbonsäuredibutylamid und C16-C18-Alkenyl-Carbonsäuredibutylamid (in der Summe).

## Claims

1. Use of carboxamides of the formula (I)
R¹-CO-NR²R³ (I)
in which
R¹ is C₁₆-C₁₈-alkyl or C₁₆-C₁₈-alkenyl and
R² is C₄-alkyl and
R³ is C₄-alkyl
for promoting the penetration of prothioconazole into plants.

2. Use according to Claim 1, in which the carboxamides of the formula (I) are added to the active agrochemical ingredient prothioconazole as a tankmix additive.

3. Agrochemical formulations in the form of emulsion concentrates or dispersions in oil, comprising
∘ prothioconazole and
∘ at least one carboxamide of the formula (I)
R¹-CO-NR²R³ (I)
in which
R¹ is C₁₆-C₁₈-alkyl or C₁₆-C₁₈-alkenyl and
R² is C₄-alkyl and
R³ is C₄-alkyl, and
∘ at least one solvent and/or oil.

4. Agrochemical formulation according to Claim 3, in which the content of the at least one carboxamide of the formula (I) in the agrochemical formulation is
∘ 1 to 50% by weight.

5. Agrochemical formulations according to Claim 3 comprising
• 15 - 35% by weight of prothioconazole and
• 25 - 45% by weight of N,N-dimethyldecanamide and
• 10 - 40% by weight of one or more emulsifiers and
• 0.01 - 1.0% by weight of defoamer, and
• 5 - 30% by weight of N,N-dibutyl-C16-C18-alkylcarboxamide and N,N-dibutyl-C16-C18-alkenylcarboxamide (in total).

## Revendications

1. Utilisation d'amides d'acides carboxyliques de formule (I)
R¹-CO-NR²R³ (I)
dans laquelle
R¹ signifie un alkyle en C₁₆-C₁₈ ou un alcényle en C₁₆-C₁₈, et
R² signifie un alkyle en C₄, et
R³ signifie un alkyle en C₄,
pour favoriser la pénétration de prothioconazole dans des plantes.

2. Utilisation selon la revendication 1, dans laquelle les amides d'acides carboxyliques de formule (I) sont ajoutés à l'agent actif agrochimique prothioconazole sous la forme d'un additif pour mélange en cuve.

3. Formulations agrochimiques sous la forme de concentrés d'émulsions ou de dispersions dans de l'huile, contenant :
- du prothioconazole, et
- au moins un amide d'acide carboxylique de formule (I)
R¹-CO-NR²R³ (I)
dans laquelle
R¹ signifie un alkyle en C₁₆-C₁₈ ou un alcényle en C₁₆-C₁₈, et
R² signifie un alkyle en C₄, et
R³ signifie un alkyle en C₄, ainsi que
- au moins un solvant et/ou une huile.

4. Formulations agrochimiques selon la revendication 3, dans lesquelles la teneur dudit au moins un amide d'acide carboxylique de formule (I) dans la formulation agrochimique
- est de 1 à 50 % en poids.

5. Formulations agrochimiques selon la revendication 3, contenant :
- 15 à 35 % en poids de prothioconazole et
- 25 à 45 % en poids de N,N-diméthyldécanamide et
- 10 à 40 % en poids d'un ou de plusieurs émulsifiants, et
- 0,01 à 1,0 % en poids d'antimousses, et
- 5 à 30 % en poids d'un dibutylamide d'acide alkyle en C16-C18-carboxylique et un dibutylamide d'acide alcényle en C16-C18-carboxylique (au total).
